# EUROPÄISCHE PATENTSCHRIFT

(11) **EP 3 433 960 B1**
(45) Veröffentlichungstag und Bekanntmachung des Hinweises auf die Patenterteilung: **04.05.2022**
(21) Anmeldenummer: 17713227.1
(22) Anmeldetag: 22.03.2017
(51) Int. Cl.: H04L 1/00

(54) **TELEGRAMMAUFTEILUNGSÜBERTRAGUNGSVERFAHREN FÜR BIDIREKTIONALE NETZE**
TELEGRAM DIVISION TRANSFER METHOD FOR BIDIRECTIONAL NETWORKS
PROCÉDÉ DE TRANSMISSION D'UN TÉLÉGRAMME PAR RÉPARTITION POUR LES RÉSEAUX BIDIRECTIONNELS

(30) Priorität: 24.03.2016 DE 102016205052
(43) Veröffentlichungstag der Anmeldung: 30.01.2019
(73) Patentinhaber: Fraunhofer-Gesellschaft zur Förderung der angewandten Forschung e.V., 80686 München (DE); Friedrich-Alexander-Universität Erlangen-Nürnberg, 91054 Erlangen (DE)
(72) Erfinder: BERNHARD, Josef, 92507 Nabburg (DE); WECHSLER, Johannes, 91174 Spalt (DE); KILIAN, Gerd, 91056 Erlangen (DE); KNEISSL, Jakob, 90765 Fürth (DE); ROBERT, Jörg, 91080 Uttenreuth (DE); HEUBERGER, Albert, 91056 Erlangen (DE)
(74) Vertreter: Schlenker, Julian
(86) Internationale Anmeldenummer: PCT/EP2017/056829
(87) Internationale Veröffentlichungsnummer: WO 2017/162740

(56) Entgegenhaltungen:
- EP-A1- 2 264 931
- DE-A1-102011 082 098
- US-A1- 2005 176 371
- US-A1- 2005 251 838
- KILIAN GERD ET AL: "Increasing Transmission Reliability for Telemetry Systems Using Telegram Splitting", IEEE TRANSACTIONS ON COMMUNICATIONS, IEEE SERVICE CENTER, PISCATAWAY, NJ. USA, Bd. 63, Nr. 3, 1. März 2015 (2015-03-01), Seiten 949-961, XP011575488, ISSN: 0090-6778, DOI: 10.1109/TCOMM.2014.2386859 [gefunden am 2015-03-13]

## Beschreibung

Ausführungsbeispiele der vorliegenden Erfindung beziehen sich auf einen Datensender, insbesondere auf einen Datensender der ein Datenpaket aufgeteilt in mehrere Sendedatenpakete über einen Kommunikationskanal zu einem Datenempfänger sendet. Weitere Ausführungsbeispiele beziehen sich auf einen Datenempfänger, insbesondere auf einen Datenempfänger, der ein Datenpaket, das von einem Datensender aufgeteilt in mehrere Sendedatenpakete über einen Kommunikationskanal gesendet wird, empfängt. Manche Ausführungsbeispiele beziehen sich auf eine Erweiterung des Telegram-Splitting-Übertragungsverfahrens um eine simultane Übertragung in bidirektionalen Netzen zu nutzen.

Es gibt bereits verschiedene unidirektionale und bidirektionale Systeme für die Übertragung von Daten zwischen Basisstation und Knoten. Bekannte Systeme sind z. B. DECT (DECT= Digital Enhanced Cordless Telecommunications, dt. digitale, verbesserte schnurlose Telekommunikation) und RFID (RFID= Radio Frequency Identification, dt. Identifizierung mit Hilfe elektromagnetischer Wellen). Typisch an diesen Systemen ist, dass die Basisstation eine Referenzfrequenz und eine Referenzzeit vorgibt, auf die sich die Knoten synchronisieren. Beispielsweise gibt bei RFID Systemen eine Lesegerät (Basisstation) ein Zeitfenster vor, das unmittelbar nach seiner Aussendung folgt, innerhalb dessen sich die RFID Transponder (Knoten) zufällig einen Zeitpunkt für die Rückantwort aussuchen. Das vorgegebene Zeitintervall ist zudem in Zeitschlitze gleicher Länge unterteilt. Man spricht hier von einem slotted ALOHA (dt. unterteiltes ALOHA) Protokoll. Bei DECT wiederum sind Zeitschlitze innerhalb eines fest vorgegebenen Rasters vorgesehen. Die Basisstation ordnet hier einem Teilnehmer einen exakten Zeitschlitz zu, den er für die Kommunikation verwenden darf. Aufgrund der Ungenauigkeit durch die Quarztoleranz ist zwischen den Zeitschlitzen eine Pufferzeit vorgesehen, damit sich die Datenpakete nicht überlagern.

Die DE 10 2011 082 098 beschreibt ein Verfahren für batteriebetriebene Sender, bei dem das Datenpaket in Sendepakete unterteilt wird, die kleiner sind als die eigentliche Information, die übertragen werden soll (so genanntes Telegram-Splitting (dt. Telegrammaufteilung)). Telegramme werden dabei auf mehrere Teilpakete aufgeteilt. Ein solches Teilpaket wird als Subpaket bezeichnet. In einem Subpaket werden mehrerer Informationssymbole übertragen. Die Subpakete werden auf einer Frequenz oder aber über mehrere Frequenzen verteilt, sog. Frequency Hopping, gesendet. Zwischen den Subpaketen gibt es Pausen, in denen nicht gesendet wird.

Des Weiteren wird in [G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013] ein Niedrigenergie-Telegram-Splitting-System mit verbesserter Netzabdeckung beschrieben.

Darüber hinaus wird in [G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015] beschrieben, wie eine Übertragungszuverlässigkeit bei Telegram-Splitting-Telemetrie-Systemen verbessert werden kann.

Nach wie vor kommt es jedoch bei der Datenübertragung zwischen vielen Teilnehmern in einem Netzwerk mit geringen Datendurchsatz und hoher Reichweite bedingt durch interferenzbehafteter Kanäle zu Kollisionen und damit zu Datenverlusten.

Die US 2005/0251838 A1 bezieht sich auf ein System zur skalierbaren Übertragung von Inhalten in einem Datennetz. Hierbei werden mehrerer Inhaltsclips bereitgestellt und QoS-Faktoren für die Inhaltsclips bestimmt, wobei die Inhaltsclips basierend auf den bestimmten QoS-Faktoren gruppiert werden. Anschließend werden die Inhaltsclips in den Gruppen codiert, um codierte Inhaltsclips zu erhalten, die in einem Inhaltsclip-Stream übertragen werden.

Die EP 2 264 931 A1 beschreibt einen bitweisen Verschachtelers (engl. bitwise interleaver), der in einem DVB-SH Transmitter zum Einsatz kommen kann.

Der vorliegenden Erfindung liegt somit die Aufgabe zugrunde, ein Konzept zu schaffen, bei der Datenübertragung zwischen vielen Teilnehmern unter Verwendung eines interferenzbehafteten Kanals eine Kanalauslastung oder Übertragungszuverlässigkeit weiter zu erhöhen.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Datensender. Der Datensender umfasst eine Einrichtung zum Erzeugen von Sendedatenpaketen, die ausgebildet ist, um ein erstes für einen ersten Datenempfänger bestimmtes Datenpaket in zumindest zwei Sendedatenpakete aufzuteilen, wobei jedes der für den ersten Datenempfänger bestimmten Sendedatenpakete kürzer ist als das erste Datenpaket. Ferner umfasst der Datensender eine Einrichtung zum Senden von Datenpaketen, die ausgebildet ist, um die zumindest zwei für den ersten Datenempfänger bestimmten Sendedatenpakete mit einem zeitlichen Abstand über einen Kommunikationskanal zu senden. Dabei ist die Einrichtung zum Senden von Datenpaketen ausgebildet, um zumindest ein weiteres Sendedatenpaket zu dem ersten Datenempfänger oder einem zweiten Datenempfänger in dem zeitlichen Abstand zwischen den zumindest zwei für den ersten Datenempfänger bestimmten Sendedatenpaketen zu senden.

Bei Ausführungsbeispielen kann der Datensender somit den zeitlichen Abstand (z.B. Lücke, Pause) zwischen zwei Sendedatenpaketen bzw. zwischen dem Aussenden von zwei Sendedatenpaketen nutzen, um (zumindest) ein weiteres Sendedatenpaket auszusenden, wodurch eine Kanalbelegung bzw. Kanalauslastung verbessert werden kann.

Weitere Ausführungsbeispiele, die nicht beansprucht werden, schaffen einen Datensender. Der Datensender umfasst eine Einrichtung zum Erzeugen von Sendedatenpaketen, die ausgebildet ist, um ein erstes Datenpaket in zumindest drei Sendedatenpakete aufzuteilen, wobei jedes der zumindest drei Sendedatenpakete kürzer ist als das erste Datenpaket, wobei die Einrichtung zum Erzeugen von Datenpaketen ausgebildet ist, um die zumindest drei Sendedatenpakete derart kanalzucodieren, dass nur ein Anteil der Sendedatenpakete zum Decodieren des ersten Datenpakets erforderlich ist. Ferner umfasst der Datensender eine Einrichtung zum Senden von Datenpaketen, die ausgebildet ist, um die zumindest drei Sendedatenpakete in einem Frequenzkanal über einen Kommunikationskanal mit einem zeitlichen Abstand zu senden. Des Weiteren umfasst der Datensender eine Einrichtung zum Überwachen des Frequenzkanals, die ausgebildet ist, um eine Störung oder eine Übertragung eines anderen Datensenders in dem Frequenzkanal zu erkennen. Dabei ist die Einrichtung zum Senden von Datenpaketen ausgebildet, um ein zum Senden anstehendes Sendedatenpaket der zumindest drei Sendedatenpakte nicht, nur teilweise oder später über den Kommunikationskanal zu senden, wenn zu dem Zeitpunkt der geplanten Aussendung des Datenpakets eine Störung oder eine Übertragung von einem anderen Datensender von der Einrichtung zum Überwachen des Frequenzkanals erkannt wird.

Bei Ausführungsbeispielen, die nicht beansprucht werden, kann der Datensender somit bei Erkennung einer Störung oder Übertragung von einem anderen Datensender, das zum Senden anstehende Sendedatenpaket nicht, nur teilweise oder später über den Kommunikationskanal senden. Bedingt durch die verwendete Kanalcodierung, mit der die Sendedatenpakete kanalcodiert sind, ist es sogar möglich, eines (oder mehrere) der Sendedatenpakete nicht oder nur teilweise auszusenden, ohne dass hierbei ein Datenverlust bzw. Informationsverlust entsteht, da nur ein Anteil, d.h. nicht alle, der Sendedatenpakete zum Decodieren des ersten Datenpakets erforderlich sind.

Weitere Ausführungsbeispiele, die nicht beansprucht werden, schaffen einen Datensender. Der Datensender umfasst eine Einrichtung zum Erzeugen von Sendedatenpaketen, die ausgebildet ist, um ein erstes Datenpaket in zumindest drei Sendedatenpakete aufzuteilen, wobei jedes der zumindest drei Sendedatenpakete kürzer ist als das erste Datenpaket, wobei die Einrichtung zum Erzeugen von Datenpaketen ausgebildet ist, um die zumindest drei Sendedatenpakete derart kanalzucodieren, dass nur ein Anteil der Sendedatenpakete zum Decodieren des ersten Datenpakets erforderlich ist. Ferner umfasst der Datensender eine Einrichtung zum Senden von Datenpaketen, die ausgebildet ist, um die zumindest drei Sendedatenpakete über einen Kommunikationskanal mit einem zeitlichen Abstand zu senden. Dabei ist die Einrichtung zum Senden von Datenpaketen ausgebildet, um ein zum Senden anstehendes Sendedatenpaket der zumindest drei Sendedatenpakte nicht, nur teilweise oder später zu senden.

Bei Ausführungsbeispielen, die nicht beansprucht werden, kann der Datensender somit, wenn z.B. zu dem Zeitpunkt des Sendes des einen Sendedatenpakets ein weiteres Sendedatenpaket zum Senden ansteht, das zum Senden anstehende Sendedatenpaket der zumindest drei Sendedatenpakete nicht, nur teilweise oder später über den Kommunikationskanal senden. Bedingt durch die verwendete Kanalcodierung, mit der die Sendedatenpakete kanalcodiert sind, ist es sogar möglich, eines (oder mehrere) der Sendedatenpakete nicht oder nur teilweise auszusenden, ohne dass hierbei ein Datenverlust bzw. Informationsverlust entsteht, da nur ein Anteil, d.h. nicht alle, der Sendedatenpakete zum Decodieren des ersten Datenpakets erforderlich sind.

Weitere Ausführungsbeispiele, die nicht beansprucht werden, schaffen einen Datenempfänger. Der Datenempfänger umfasst eine Einrichtung zum Empfangen von Datenpaketen, die ausgebildet ist, um zumindest zwei Sendedatenpakete von einem ersten Datensender zu empfangen, die mit einem zeitlichen Abstand über einen Kommunikationskanal gesendet werden und jeweils einen Teil eines ersten Datenpakets enthalten, wobei die Einrichtung zum Empfangen von Datenpaketen ausgebildet ist, um die zumindest zwei Sendedatenpakete zu kombinieren, um das erste Datenpaket zu erhalten, und wobei die Einrichtung zum Empfangen von Datenpaketen ausgebildet ist, um in dem zeitlichen Abstand zwischen den zumindest zwei Sendedatenpaketen zumindest ein weiteres Datenpaket von dem ersten Datensender oder einem zweiten Datensender zu empfangen.

Weitere Ausführungsbeispiele schaffen ein System mit einem der oben beschriebenen Datensender und dem oben beschriebenen Datenempfänger.

Bei Ausführungsbeispielen kann das System bidirektional sein mit Telegrammaufteilung im Uplink (der Uplink bezeichnet die Verbindung (englisch link) mit der Datenflussrichtung, welche aus der Sicht eines Endgerätes in die Richtung des Telekommunikationsnetzes geht) und/oder Downlink (der Downlink bezeichnet die Verbindung (englisch link) mit der Datenflussrichtung, welche aus der Sicht eines Endgerätes aus der Richtung des Telekommunikationsnetzes kommt). Sowohl für den Uplink als auch für den Downlink kann für jede oder für einige Übertragungen das Telegramm-Aufteilungs-Verfahren verwendet werden.

Ausführungsbeispiele ermöglichen eine effiziente Datenübertragung zwischen vielen Teilnehmern in einem Netzwerk mit geringem Datendurchsatz und hoher Reichweite für die Nutzung in interferenzbehafteten Kanälen. Bei Ausführungsbeispielen kann das Prinzip des Telegram-Splitting-Verfahrens für eine bidirektionale Kommunikation genutzt werden. Die Übertragung findet dann nichtmehr zwangsweise zwischen einer Basisstation und einem Sensorknoten statt, sondern kann zwischen beliebigen Teilnehmern geschehen. Ausführungsbeispiele ermöglichen ferner das simultane Senden- und/oder Empfangen mehrerer Übertragungen und ermöglichen zudem eine Auflösung der dadurch entstehenden Kollisionen. Beispielsweise können hierzu Methoden zur Priorisierung einzelner Telegramme genutzt werden. Des Weiteren ermöglichen es Ausführungsbeispiele den Kanal durch gezielte Leistungsanpassung zu entlasten.

Im Gegensatz dazu führt das Weglassen von Aussendungen eines Referenzsignals oder eines Downlink-Signals oder eines Uplink-Signals zu Verlust der Synchronität zwischen Basisstation und Sensorknoten oder zu Datenverlust bei der Übertragung. Das Telegram-Splitting-Verfahren erlaubt, ohne dass Datenverlust auftritt, den Ausfall von mehreren Subpaketen bei der Übertragung eines Telegramms. Der Grundgedanke, dass nicht alle Subpakete für eine Übertragung benötigt werden eröffnet bei der Übertragung mittels Telegram-Splitting vielfältige Möglichkeiten bei der Kommunikation mit mehreren Teilnehmern. Durch gezieltes Steuern des Subpaketversands und Subpaketempfangs kann die Übertragung noch weiter verbessert und der Gesamtdurchsatz des Netzes erhöht werden. Bei Ausführungsbeispielen kann ein Telegram-Splitting-Teilnehmer durch gezieltes auslassen oder gezieltes aussenden bzw. empfangen von Subpaket Informationen die Kommunikation beeinflussen. Ferner ermöglichen Ausführungsbeispiele bei der Kommunikation mittels Telegram-Splitting eine simultane, überlappende Übertragung von und zu mehreren anderen Teilnehmern.

Weitere Ausführungsbeispiele schaffen ein Verfahren. Das Verfahren umfasst einen Schritt des Erzeugens von zumindest zwei Sendedatenpakten durch Aufteilen eines für einen ersten Datenempfänger bestimmten ersten Datenpakets in die zumindest zwei Sendedatenpakete, wobei jedes der für den ersten Datenempfänger bestimmten Sendedatenpakete kürzer ist als das erste Datenpaket; einen Schritt des Sendens der zumindest zwei für den ersten Datenempfänger bestimmten Sendedatenpakete mit einem zeitlichen Abstand über einen Kommunikationskanal; und einen Schritt des Sendens eines weiteren Sendedatenpakets zu dem ersten Datenempfänger oder einem zweiten Datenempfänger in dem zeitlichen Abstand zwischen den zumindest zwei für den ersten Datenempfänger bestimmten Sendedatenpaketen.

Weitere Ausführungsbeispiele, die nicht beansprucht werden, schaffen ein Verfahren. Das Verfahren umfasst einen Schritt des Erzeugens von zumindest drei Sendedatenpaketen durch Aufteilen eines für einen ersten Datenempfänger bestimmten ersten Datenpakets in die zumindest drei Sendedatenpakete, wobei jedes der zumindest drei Sendedatenpakete kürzer ist als das erste Datenpaket, wobei bei dem Erzeugen der zumindest drei Sendedatenpakete die zumindest drei Sendedatenpakete derart kanalcodiert werden, dass nur ein Anteil der Sendedatenpakete zum Decodieren des ersten Datenpakets erforderlich ist; einen Schritt des Sendens der zumindest drei Sendedatenpakete in einem Frequenzkanal über einen Kommunikationskanal mit einem zeitlichen Abstand; und einen Schritt des Überwachens des Frequenzkanals, um eine Störung oder eine Übertragung eines anderen Datensenders in dem Frequenzkanal zu erkennen; wobei bei dem Senden der zumindest drei Sendedatenpakete ein zum Senden anstehendes Sendedatenpaket der zumindest drei Sendedatenpakte nicht, nur teilweise oder später über den Kommunikationskanal gesendet wird, wenn zu dem Zeitpunkt des Sendens des Datenpakets eine Störung oder eine Übertragung von einem anderen Datensender von der Einrichtung zum Überwachen des Frequenzkanals erkannt wird.

Weitere Ausführungsbeispiele, die nicht beansprucht werden, schaffen ein Verfahren. Das Verfahren umfasst einen Schritt des Erzeugens von zumindest drei Sendedatenpaketen durch Aufteilen eines für einen ersten Datenempfänger bestimmten ersten Datenpakets in die zumindest drei Sendedatenpakete, wobei jedes der zumindest drei Sendedatenpakete kürzer ist als das erste Datenpaket, wobei bei dem Erzeugen der zumindest drei Sendedatenpakete die zumindest drei Sendedatenpakete derart kanalcodiert werden, dass nur ein Anteil der Sendedatenpakete zum Decodieren des ersten Datenpakets erforderlich ist; und einen Schritt des Sendens der zumindest drei Sendedatenpakete in einem Frequenzkanal über einen Kommunikationskanal mit einem zeitlichen Abstand; wobei bei dem Senden der zumindest drei Sendedatenpakete ein zum Senden anstehendes Sendedatenpaket der zumindest drei Sendedatenpakte nicht, nur teilweise oder später gesendet wird, wenn zu dem Zeitpunkt des Sendes des einen Sendedatenpakets ein weiteres Sendedatenpaket zum Senden ansteht.

Weitere Ausführungsbeispiele, die nicht beansprucht werden, schaffen ein Verfahren. Das Verfahren umfasst einen Schritt des Empfangens von zumindest zwei Sendedatenpaketen von einem ersten Datensender, wobei die zumindest zwei Sendedatenpakete mit einem zeitlichen Abstand über einen Kommunikationskanal gesendet werden und jeweils einen Teil eines ersten Datenpakets enthalten; einen Schritt des Kombinierens der zumindest zwei Sendedatenpakete, um das erste Datenpaket zu erhalten; und einen Schritt des Empfangens zumindest eines weiteren Datenpakets in dem zeitlichen Abstand zwischen den zumindest zwei Sendedatenpaketen von dem ersten Datensender oder einem zweiten Datensender.

Ausführungsbeispiele der vorliegenden Erfindung werden bezugnehmend auf die beiliegenden Figuren näher erläutert. Es zeigen:
- Fig. 1: eine schematische Ansicht eines Kommunikationssystems mit zumindest einem Datensender und zumindest einem Datenempfänger;
- Fig. 2: eine schematische Ansicht eines Datensenders, gemäß einem Ausführungsbeispiel;
- Fig. 3a: in einem Diagramm eine Belegung eines Kommunikationskanals unter Berücksichtigung der zum Senden anstehenden Sendedatenpaketen sowie einer Störung bzw. anderen Übertragung;
- Fig. 3b: in einem Diagramm eine Belegung des Kommunikationskanals unter Berücksichtigung der tatsächlich ausgesendeten Sendedatenpaketen sowie der Störung bzw. anderen Übertragung;
- Fig. 4: eine schematische Ansicht eines Datensenders, gemäß einem Ausführungsbeispiel;
- Fig. 5: eine schematische Ansicht eines Systems mit dem in Fig. 4 gezeigtem Datensender und mehreren Datenempfängern, gemäß einem Ausführungsbeispiel;
- Fig. 6: in einem Diagramm eine Belegung des Kommunikationskanals für das in Fig. 5 gezeigte System, gemäß einem Ausführungsbeispiel;
- Fig. 7: eine schematische Ansicht eines Datenempfängers, gemäß einem Ausführungsbeispiel;
- Fig. 8: eine schematische Ansicht eines Systems mit dem in Fig. 7 gezeigten Datenempfänger und mehreren Datensendern, gemäß einem Ausführungsbeispiel;
- Fig. 9: eine schematische Ansicht des in Fig. 4 gezeigten Datensenders mit einer zusätzlichen Einrichtung zum Empfangen von Datenpaketen, gemäß einem Ausführungsbeispiel;
- Fig. 10: ein schematische Ansicht eines Systems mit dem in Fig. 9 gezeigten Sendeempfänger sowie zwei Datensendern und zwei Datenempfängern, gemäß einem Ausführungsbeispiel;
- Fig. 11: eine schematische Ansicht eines Systems mit zwei Sendeempfängern, gemäß einem Ausführungsbeispiel;
- Fig. 12: in einem Diagramm eine Belegung des Kommunikationskanals für das in Fig. 11 gezeigte System, gemäß einem Ausführungsbeispiel;
- Fig. 13: eine schematische Ansicht eines Datensenders, gemäß einem Ausführungsbeispiel der vorliegenden Erfindung;
- Fig. 14a: in einem Diagramm eine Belegung eines Kommunikationskanals unter Berücksichtigung der zum Senden anstehenden Sendedatenpaketen, die sich teilweise überlappen;
- Fig. 14b: in einem Diagramm eine Belegung des Kommunikationskanals unter Berücksichtigung der tatsächlich ausgesendeten Sendedatenpaketen, so dass keine Überlappung von Sendedatenpaketen entsteht;
- Fig. 15a: in einem Diagramm eine Belegung eines Kommunikationskanals unter Berücksichtigung der zum Senden anstehenden Sendedatenpaketen, die sich teilweise überlappen;
- Fig. 15b: in einem Diagramm eine Belegung des Kommunikationskanals unter Berücksichtigung der tatsächlich ausgesendeten Sendedatenpaketen, so dass keine Überlappung von Sendedatenpaketen entsteht;
- Fig. 16: ein Flussdiagramm eines Verfahrens zum Senden von Datenpaketen, gemäß einem Ausführungsbeispiel;
- Fig. 17: ein Flussdiagramm eines Verfahrens zum Senden von Datenpaketen, gemäß einem Ausführungsbeispiel;
- Fig. 18: ein Flussdiagramm eines Verfahrens zum Senden von Datenpaketen, gemäß einem Ausführungsbeispiel; und
- Fig. 19: ein Flussdiagramm eines Verfahrens zum Empfangen von Datenpaketen, gemäß einem Ausführungsbeispiel.

In der nachfolgenden Beschreibung der Ausführungsbeispiele der Erfindung werden in den Figuren gleiche oder gleichwirkende Elemente mit den gleichen Bezugszeichen versehen, so dass deren Beschreibung in den unterschiedlichen Ausführungsbeispielen untereinander austauschbar ist.

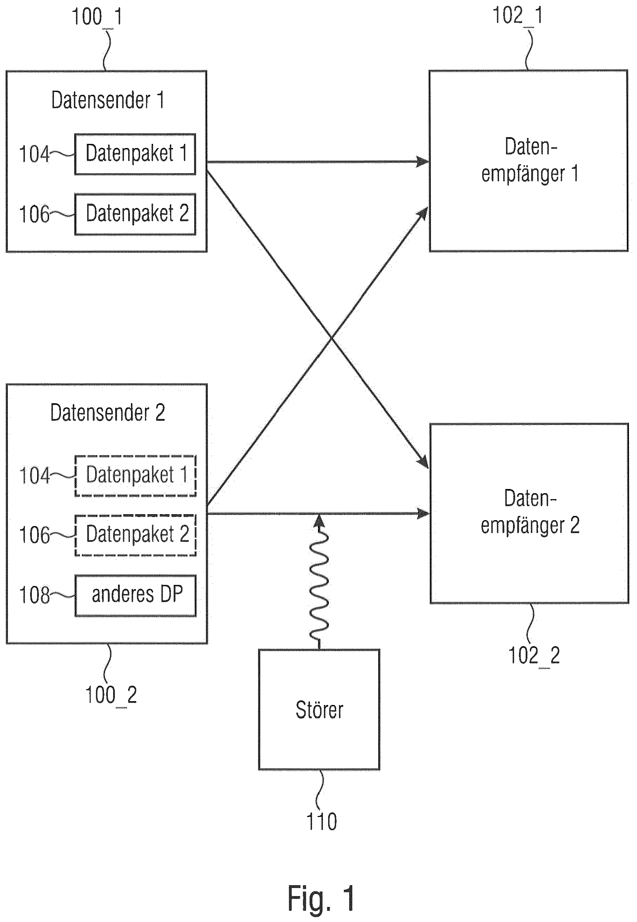

Bevor jedoch Ausführungsbeispiele des erfindungsgemäßen Datensenders und des erfindungsgemäßen Datenempfängers im Detail beschrieben werden, wird zunächst anhand von Fig. 1 ein beispielhaftes Kommunikationssystem gezeigt, in dem der Datensender und der Datenempfänger eingesetzt werden können.

Im Detail zeigt Fig. 1 eine schematische Ansicht eines Kommunikationssystems mit zumindest einem Datensender 100_1 und zumindest einem Datenempfänger 102_1. Das Kommunikationssystem kann optional ferner einen zweiten Datensender 100_2 umfassen, wobei in diesem Fall der Datensender 100_1 als erster Datensender 100_1 bezeichnet werden kann. Genauso kann das Kommunikationssystem optional einen zweiten Datenempfänger 102_2 umfassen, wobei in diesem Fall der Datenempfänger 102_1 als erster Datenempfänger 102_1 bezeichnet werden kann.

Bei dem ersten Datensender 100_1 und dem zweiten Datensender 100_2 kann es sich um gleiche Datensender handeln. Genauso kann es sich beim dem ersten Datenempfänger 102_1 und dem zweiten Datenempfänger 102_2 um gleiche Datenempfänger handeln.

Der erste Datensender 100_1 kann beispielsweise ein erstes Datenpaket 104 an den ersten Datenempfänger 102_1 und ein zweites Datenpaket 106 an den zweiten Datenempfänger senden. In diesem Fall empfängt der erste Datenempfänger 102_1 das erste Datenpaket 104 und der zweite Datenempfänger 102_2 das zweite Datenpaket 106.

Natürlich kann der erste Datensender 100_1 auch das erste Datenpaket 104 an den ersten Datenempfänger 102_1 und das zweite Datenpaket 106 an den zweiten Datenempfänger 102_2 senden. In diesem Fall empfängt der erste Datenempfänger 102_1 das erste Datenpaket 104 und der zweite Datenempfänger 102_2 das zweite Datenpaket 106.

Selbstverständlich ist es auch möglich, dass anstelle des ersten Datensenders 100_1 der zweite Datensender 100_2 zumindest eines der beiden Datenpakete 104 und 106 an den jeweiligen Datenempfänger 102_1 und 102_2 sendet. Demnach kann auch einer der beiden Datenempfänger 102_1 und 102_2 beide Datenpakete 104 und 106 empfangen, die von einem oder beiden Datensendern 100_1 und 100_2 gesendet werden können.

Ferner kann aus der Sicht des (ersten) Datensenders 100_1 der zweite Datensender 100_2 ein anderer Datensender 100_2 sein, der ein anderes Datenpaket 108 sendet. Der andere Datensender 100_2 muss dabei nicht Teil des Kommunikationssystems sein.

Des Weiteren kann neben dem Kommunikationssystem ein Störer 110 vorhanden sein, der die Übertragungen des Kommunikationssystems stört.

Bei den Datensendern kann es sich sowohl um Basisstationen als auch um Knoten (Sensorknoten) handeln. Beispielsweise kann das System zur Übertragung von Daten von einer Basisstation, z.B. Steuerdaten zur Anpassung einzelner Parameter eines Aktors oder Sensors, zu einem Einzelnen oder einer großen Anzahl von einfachen Knoten verwendet werden. Das genutzt Funkübertragungsband ist hierbei in der Regel nicht exklusiv für diese Übertragung reserviert, sondern wird mit vielen weiteren Systemen geteilt, was eine zuverlässige Übertragung der Information erschwert. Zudem unterliegen geeignete Bänder einer Regulierung, die die erlaubte Übertragungszeit über eine gegebene Periode beschränkt.

Da nicht nur das Senden von Daten sondern auch das Empfangen von Daten einen vergleichsweise hohen Energieverbrauch nach sich zieht, kann das Telegram-Splitting-Verfahren sowohl zur Übertragung von Daten von den Knoten zur Basisstation als auch zur Übertragung von Daten von der Basisstation zum Knoten verwendet werden. In beiden Fällen ist der Energieverbrauch der Knoten kleinzuhalten, da diese eventuell keine konstante Stromversorgung besitzen, sondern z.B. sogenanntes Energy Harvesting (dt. Energieernten) betreiben, also Energie aus der Umgebung beziehen (Temperaturunterschiede, Sonnenlicht, Elektromagnetische Wellen, usw.), oder eine Batterie besitzen, die den Strom für den Sender bzw. Empfänger nicht über eine genügend lange Zeit liefern kann.

### Telegrammaufteilung im Sendepfad mit Überwachung des Frequenzkanals

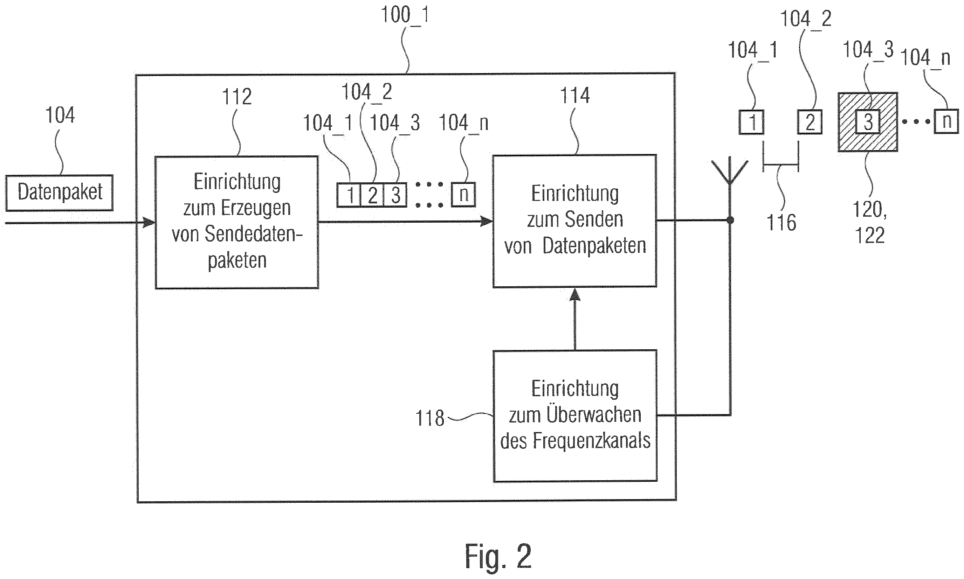

Fig. 2 zeigt eine schematische Ansicht des Datensenders 100_1, gemäß einem Ausführungsbeispiel. Der Datensender 100_1 umfasst eine Einrichtung 112 zum Erzeugen von Sendedatenpaketen, die ausgebildet ist, um ein erstes Datenpaket 104 in zumindest drei Sendedatenpakete 104_1 bis 104_n aufzuteilen (n kann eine natürlich Zahl größer gleich drei sein), wobei jedes der zumindest drei Sendedatenpakete 104_1 bis 104_n kürzer ist als das erste Datenpaket 104, wobei die Einrichtung 112 zum Erzeugen von Datenpaketen ausgebildet ist, um die zumindest drei Sendedatenpakete 104_1 bis 104_n derart kanalzucodieren, dass nur ein Anteil der Sendedatenpakete 104_1 bis 104_n (z.B. (zumindest) zwei der zumindest drei Sendedatenpakete 104_1 bis 104_n) zum Decodieren des ersten Datenpakets 104 erforderlich ist. Der Datensender 100_1 umfasst ferner eine Einrichtung 114 zum Senden von Datenpaketen, die ausgebildet ist, um die zumindest drei Sendedatenpakete 104_1 bis 104_n in einem Frequenzkanal über einen Kommunikationskanal mit einem zeitlichen Abstand 116 zu senden. Der Datensender 100_1 umfasst ferner eine Einrichtung 118 zum Überwachen des Frequenzkanals, die ausgebildet ist, um eine Störung 120 von dem Störer 110 oder eine Übertragung 122 eines anderen Datensenders 100_2 in dem Frequenzkanal zu erkennen. Die Einrichtung 114 zum Senden von Datenpaketen ist dabei ausgebildet, um ein zum Senden anstehendes Sendedatenpaket der zumindest drei Sendedatenpakte 104_1 bis 104_n nicht, nur teilweise oder später über den Kommunikationskanal zu senden, wenn zu dem Zeitpunkt des Sendens des Sendedatenpakets eine Störung 120 oder eine Übertragung 122 von einem anderen Datensender 100_2 von der Einrichtung 118 zum Überwachen des Frequenzkanals erkannt wird.

Bei Ausführungsbeispielen kann der Datensender 100_1 somit bei Erkennung einer Störung 120 oder einer Übertragung 122 von einem anderen Datensender 100_2, das zum Senden anstehende Sendedatenpaket nicht, nur teilweise oder später über den Kommunikationskanal senden. Bedingt durch die verwendete Kanalcodierung, mit der die Sendedatenpakete 104_1 bis 104_n kanalcodiert sind, ist es sogar möglich, eines (oder mehrere) der Sendedatenpakete nicht, nur teilweise oder später auszusenden, ohne dass hierbei ein Datenverlust bzw. Informationsverlust entsteht, da nur ein Anteil, d.h. nicht alle, der Sendedatenpakete zum Decodieren des ersten Datenpakets 104 erforderlich sind.

Wie in Fig. 2 beispielhaft gezeigt ist, kann eine Störung 120 bzw. Übertragung 122 eines anderen Datensenders 100_2 kurz vor der geplanten Übertragung des dritten Sendedatenpakets 104_3 auftreten und von der Einrichtung 118 zum Überwachen des Frequenzkanals erkannt werden, woraufhin die Einrichtung 114 zum Senden von Datenpaketen das dritte Sendedatenpaket 104_3 nicht, nur teilweise oder später über den Kommunikationskanal sendet.

Beispielsweise kann die Einrichtung 118 zum Überwachen des Frequenzkanals ausgebildet sein, um eine Leistungsdetektion in dem Frequenzkanal durchzuführen, um die Störung 120 oder die Übertragung 122 des anderen Datensenders 100_2 in dem Frequenzkanal zu erkennen.

Ferner (alternativ oder zusätzlich) kann die Einrichtung 118 zum Überwachen des Frequenzkanals ausgebildet sein, um die Störung 120 oder die Übertragung 120 des anderen Datensenders 100_2 in dem Frequenzkanal basierend auf einer vorherigen Störung oder vorherigen Übertragung eines anderen Datensenders und/oder basierend auf einer Störung oder Übertragung eines anderen Datensenders in einem zu dem Frequenzkanal benachbarten Frequenzkanal zu prädizieren.

Die Einrichtung 114 zum Senden von Datenpaketen kann ferner ausgebildet sein, um den zeitlichen Abstand 116 zwischen den Sendedatenpaketen 104_1 bis 104_n in Abhängigkeit von der erkannten Störung 120 oder Übertragung 122 des anderen Datensenders 100_2 anzupassen.

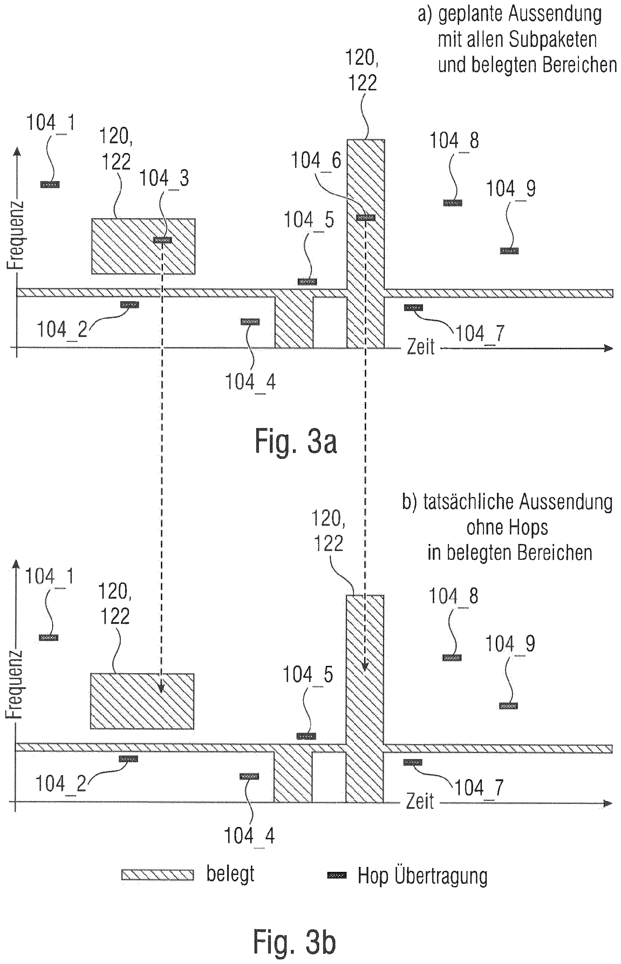

Im Folgenden wird die Funktionsweise des in Fig. 2 gezeigten Datensenders 100_1 anhand der in den Fig. 3a und 3b gezeigten Diagramme näher erläutert.

Im Detail zeigt Fig. 3a in einem Diagramm eine Belegung des Kommunikationskanals (Übertragungsmediums) mit den zum Senden anstehenden (geplanten) Sendedatenpaketen 104_1 bis 104_n sowie einer Störung 120 bzw. anderen Übertragung 122, während Fig. 3b in einem Diagramm eine Belegung des Kommunikationskanals mit den tatsächlich ausgesendeten Sendedatenpaketen 104_1 bis 104_n unter Berücksichtigung der Störung 120 bzw. anderen Übertragung 122 zeigt. Die Ordinate beschreibt in Fig. 3a und 3b jeweils die Frequenz und die Abszisse jeweils die Zeit.

Wie in Fig. 3a und 3b zu erkennen ist, kann der Datensender 100_1 (bzw. die Einrichtung 114 zum Senden von Datenpaketen) ausgebildet sein, um ein drittes Sendedatenpaket 104_3 und ein sechstes Sendedatenpaket 104_6 der zumindest drei Sendedatenpakete 104_1 bis 104_n bedingt durch die erkannte Störung 120 bzw. andere Übertragung 122 nicht zu senden.

Wie in den Fig. 3a und 3b ebenfalls angedeutet ist, kann die Einrichtung 114 zum Senden von Datenpaketen ausgebildet sein, um die Sendepakete über mehrere (zumindest zwei) Frequenzkanäle (bzw. Sendefrequenzen) zu verteilen.

Der Datensender 100_1 kann also im Sendepfad das Telegramm-Splitting-Verfahren mit einer Überwachung des Frequenzkanal (engl. listen-before-talk) nutzen. Fig. 2 bis 3b beziehen sich also auf ein Übertragungssystem mit Telegramm-Splitting, bei dem einzelne Subpakete (Sendedatenpakete) 104_1 bis 104_n nicht oder nur zum Teil übertragen werden, wenn im Kanal auf dem Frequenzbereich in dem das Subpaket übertragen werden soll Aktivität festgestellt wird. Aktivität kann z.B. mittels einer Leistungsdetektion im Zielband des Subpakets stattfinden. Zudem ist es möglich die Aktivität des Kanals durch vorhandene Beobachtungen der Vergangenheit oder dir derzeitige Nachbarkanalaktivität zu prädizieren. Durch den Fehlerschutz (Kanalcodierung) kann das Telegramm (erste Datenpaket 104) auch unter Auslassung der Übertragung einiger Subpakets fehlerfrei decodiert werden.

### Telegrammaufteilung im Sendepfad, gleichzeitige Aussendung mehrerer Telegramme

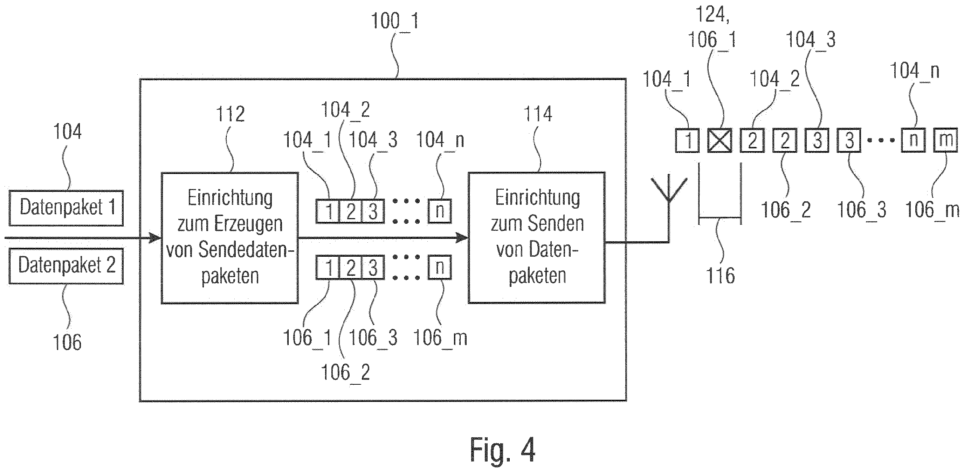

Fig. 4 zeigt ein schematische Ansicht eines Datensenders 100_1, gemäß einem Ausführungsbeispiel. Der Datensender 100_1 umfasst eine Einrichtung 112 zum Erzeugen von Sendedatenpaketen, die ausgebildet ist, um ein erstes für den ersten Datenempfänger 102_1 bestimmtes Datenpaket 104 in zumindest zwei Sendedatenpakete 104_1 bis 104_n aufzuteilen (n kann eine natürliche Zahl größer gleich zwei sein), wobei jedes der für den ersten Datenempfänger 102_1 bestimmten Sendedatenpakete 104_1 bis 104_n kürzer ist als das erste Datenpaket 104. Der Datensender 100_1 umfasst ferner eine Einrichtung 114 zum Senden von Datenpaketen, die ausgebildet ist, um die zumindest zwei für den ersten Datenempfänger 102_1 bestimmten Sendedatenpakete 104_1 bis 104_n mit einem zeitlichen Abstand 116 über einen Kommunikationskanal zu senden. Die Einrichtung 114 zum Senden von Datenpaketen ist dabei ausgebildet, um zumindest ein weiteres Sendedatenpaket 124 zu dem ersten Datenempfänger 102_1 oder dem zweiten Datenempfänger 102_2 in dem zeitlichen Abstand 116 zwischen den zumindest zwei für den ersten Datenempfänger 102_1 bestimmten Sendedatenpaketen 104_1 bis 104_n zu senden.

Bei Ausführungsbeispielen kann der Datensender 100_1 somit den zeitlichen Abstand (z.B. Lücke, Pause) 116 zwischen zwei Sendedatenpaketen 104_1 bis 104_n bzw. zwischen dem Aussenden von zwei Sendedatenpaketen 104_1 bis 104_n nutzen, um (zumindest) ein weiteres Sendedatenpaket 124 auszusenden, wodurch eine Kanalbelegung bzw. Kanalauslastung verbessert werden kann.

Das weitere Sendedatenpaket 124 kann dabei ein beliebiges Datenpaket sein welches mit einem beliebigen Übertragungsverfahren gesendet werden kann.

Natürlich ist es auch möglich, dass das weitere Sendedatenpaket 124 eines von zumindest zwei Sendedatenpaketen ist, mittels denen der Datensender 100_1 das zweite Datenpaket 106 aufgeteilt über den Kommunikationskanal zu dem ersten Datenempfänger 102_1 oder dem zweiten Datenempfänger 102_2 sendet.

Beispielsweise kann die Einrichtung 112 zum Erzeugen von Sendedatenpaketen ausgebildet sein, um das zweite für den zweiten Datenempfänger 102_2 bestimmte Datenpaket 106 in zumindest zwei Sendedatenpakete 106_1 bis 106_m aufzuteilen (m kann eine natürliche Zahl größer gleich zwei sein), wobei jedes der zumindest zwei Sendedatenpakete 106_1 bis 106_m für den zweiten Datenempfänger 102_2 kürzer ist als das zweite Datenpaket 106. Die Einrichtung 114 zum Senden von Datenpaketen kann dabei ausgebildet sein, um die zumindest zwei Sendedatenpakete 106_1 bis 106_m mit einem zeitlichen Abstand über den Kommunikationskanal zu senden. In diesem Fall kann eins der zumindest zwei Sendedatenpakete 106_1 bis 106_m des zweiten Datenpakets 106 das weitere Sendedatenpaket sein.

Wie in Fig. 4 angedeutet ist, kann die Einrichtung 114 zum Senden von Datenpaketen ausgebildet sein, um die zumindest zwei für den ersten Datenempfänger 102_1 bestimmten Sendedatenpakete 104_1 bis 104_n und die zumindest zwei für den zweiten Datenempfänger 102_2 bestimmten Sendedatenpakete 106_1 bis 106_m abwechselnd in dem zeitlichen Abstand zwischen den für den jeweils anderen Datenempfänger bestimmten Sendedatenpaketen zu senden.

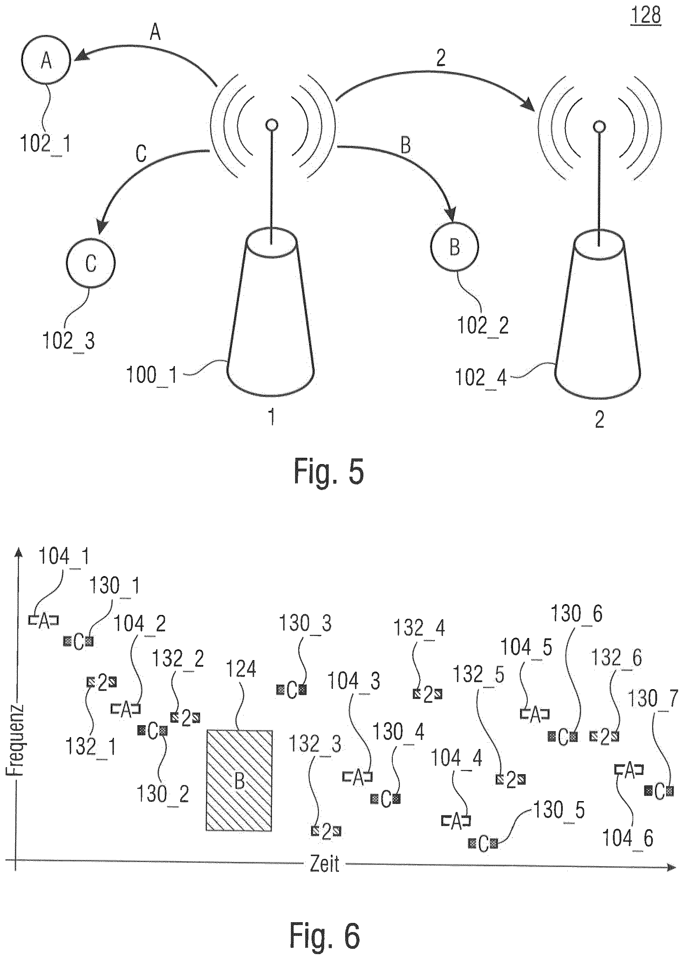

Im Folgenden wird die Funktionsweise des in Fig. 4 gezeigten Datensenders 100_1 anhand der Fig. 5 und 6 näher erläutert.

Fig. 5 zeigt ein schematische Ansicht eines Systems 128 mit dem in Fig. 4 gezeigtem Datensender 100_1 und mehreren Datenempfängern 102_1 bis 102_4, gemäß einem Ausführungsbeispiel. Im Detail zeigt Fig. 5 den ersten Datenempfänger 102_1 und den zweiten Datenempfänger 102_2. Das System 128 kann ferner (optional) einen dritten Datenempfänger 102_3 und einen vierten Datenempfänger 102_4 aufweisen. Wie in Fig. 5 beispielhaft gezeigt ist, können der Datensender 100_1 und der vierte Datenempfänger 102_4 Basisstationen sein, während der erste Datenempfänger 102_1, zweite Datenempfänger 102_2 und dritte Datenempfänger 102_3 Knoten (Sensorknoten) sein können. Fig. 5 zeigt demnach die Verteilung von Datenpaketen (oder Telegrammen) von einem Teilnehmer (Datensender) 100_1 an andere Teilnehmer (Datenempfänger) 102_1 bis 102_4.

Fig. 6 zeigt in einem Diagramm eine Belegung des Kommunikationskanals (Übertragungsmediums) für das in Fig. 5 gezeigte System 128, gemäß einem Ausführungsbeispiel. Dabei beschreibt in Fig. 6 die Ordinate die Frequenz und die Abszisse die Zeit.

Wie bereits in Bezug auf Fig. 4 beschrieben wurde und wie auch in Fig. 6 zu erkennen ist, kann die Einrichtung 114 zum Senden von Datenpaketen ausgebildet sein, um die zumindest zwei für den ersten Datenempfänger 102_1 bestimmten Sendedatenpakete 104_1 bis 104_n (in Fig. 6 auch mit "A" bezeichnet) mit einem zeitlichen Abstand über den Kommunikationskanal zu senden. Die Einrichtung 114 zum Senden von Datenpaketen kann dabei ausgebildet sein, um das weitere Sendedatenpaket 124 (in Fig. 6 mit "B" bezeichnet) zu dem zweiten Datenempfänger 102_2 in dem zeitlichen Abstand 116 zwischen den zumindest zwei für den ersten Datenempfänger 102_1 bestimmten Sendedatenpaketen 104_1 bis 104_n zu senden.

In dem in Fig. 6 gezeigten Beispiel kann das weitere Sendedatenpaket 124 mittels eines anderen Übertragungsverfahren (d.h. nicht mit dem Telegram-Splitting-Verfahren) an den zweiten Datenempfänger 102_2 ausgesendet werden.

Die Einrichtung 112 zum Erzeugen von Datenpaketen kann ferner ausgebildet sein, um ein drittes für den dritten Datenempfänger 122_3 bestimmtes Datenpaket in zumindest zwei Sendedatenpakete 130_1 bis 130_m (in Fig. 6 auch mit "C" bezeichnet) aufzuteilen (m kann eine natürliche Zahl größer gleich zwei sein), wobei jedes der für den dritten Datenempfänger 102_3 bestimmten Sendedatenpakete 130_1 bis 130_m kürzer ist als das dritte Datenpaket. Die Einrichtung 114 zum Senden von Datenpaketen kann dabei ausgebildet sein, um die zumindest zwei für den dritten Datenempfänger 102_3 bestimmten Sendedatenpakete 130_1 bis 130_m mit einem zeitlichen Abstand über den Kommunikationskanal zu senden.

Ferner kann die Einrichtung zum 112 zum Erzeugen von Datenpaketen ausgebildet sein, um ein viertes für den vierten Datenempfänger 102_4 bestimmtes Datenpaket in zumindest zwei Sendedatenpakete 132_1 bis 132_i (in Fig. 6 auch mit "2" bezeichnet) aufzuteilen (i kann eine natürliche Zahl größer gleich zwei sein), wobei jedes der für den vierten Datenempfänger 102_4 bestimmten Sendedatenpakete 132_1 bis 132_i kürzer ist als das vierte Datenpaket. Die Einrichtung 114 zum Senden von Datenpaketen kann dabei ausgebildet sein, um die zumindest zwei für den vierten Datenempfänger 102_4 bestimmten Sendedatenpakete 132_1 bis 132_i mit einem zeitlichen Abstand über den Kommunikationskanal zu senden.

Wie in Fig. 6 zu erkennen ist, können die zumindest zwei für den ersten Datenempfänger 102_1 bestimmten Sendedatenpakete 104_1 bis 104_n, die zumindest zwei für den dritten Datenempfänger 102_3 bestimmten Sendedatenpakete 130_1 bis 126_m und die zumindest zwei für den vierten Datenempfänger 102_4 bestimmten Sendedatenpakete 132_1 bis 132_i abwechselnd in den zeitlichen Abständen zwischen den für den jeweils anderen Datenempfänger bestimmten Sendedatenpaketen gesendet werden.

Der Datensender 100_1 kann demnach für die Kommunikation mit dem ersten, dritten und vierten Datenempfänger 102_1, 102_3 und 102_4 das Telegram-Splitting-Verfahren nutzten, und für die Kommunikation mit dem zweiten Datenempfänger 102_2 ein anderes Übertragungsverfahren. Selbstverständlich könnte für die Kommunikation mit dem zweiten Datenempfänger 102_2 ebenfalls das Telegram-Splitting-Verfahren genutzt werden.

Wie in Fig. 6 ebenfalls angedeutet ist, kann die Einrichtung 108 zum Senden von Datenpaketen ausgebildet sein, um die Sendepakete über mehrere (zumindest zwei) Frequenzkanäle (bzw. Sendefrequenzen) zu verteilen.

Mit anderen Worten, kann ein Teilnehmer (Datensender) 100_1 zeitlich überlappend zu mehreren anderen Teilnehmern (Datenempfänger) 102_1 bis 102_4 funken. Dies ist durch die vergleichsweise langen Pausen beim Telegram-Splitting möglich. Hierbei sendet der Teilnehmer (Datensender) 100_1 in einer Pause zwischen zwei Subpaketen (Sendedatenpaketen) eine weitere Übertragung an einen anderen Teilnehmer (Datenempfänger) oder mindestens eine weitere Übertragung an den gleichen Teilnehmer. Diese Übertragung kann ebenfalls mittels Telegramm-Splitting stattfinden, aber auch mit jeder anderen Übertragungstechnik. Wird Telegramm-Splitting verwendet, so können unterschiedliche, oder das gleiche, jedoch zeitlich versetze Sprungmuster genutzt werden. Zudem ist es möglich, aber nicht notwendig, die zeitversetzten Sprungmuster ebenfalls mit einem Frequenzversatz zu versenden.

Die Aussendung des Ganzen Telegramms (Datenpakets) dauert durch das Zeitsprungmuster vergleichsweise lange, da viele Pausen gemacht werden um die Störfestigkeit zu erhöhen. In den Pausen ist es möglich die Übertragung an einen anderen Teilnehmer ebenfalls auszusenden, wie dies Anhand des Beispiels der Übertragung von mehreren zeitlich überlappenden Telegrammen in Fig. 6 gezeigt ist. Im Detail lässt sich Fig. 6 dabei eine Belegung des Spektrums bei der Simultanen Übertragung von vier Nachrichten (Datenpaketen) A, B, C und 2 entnehmen. Für die erste, dritte und vierte Nachricht A, C und 2 kann das Telegram-Splitting-Verfahren genutzt werden. Für die erste und dritte Nachricht A und C kann das gleiche, aber zeit- und frequenzverschobene Subpaket-Muster verwendet werden. Für die vierte Nachricht 2 kann ein anderes Subpaket-Muster verwendet werden. Für die zweite Nachricht B kann eine andere Übertragungstechnik verwendet werden.

### Telegrammaufteilung im Empfangspfad, gleichzeitiger Empfang mehrerer Telegramme

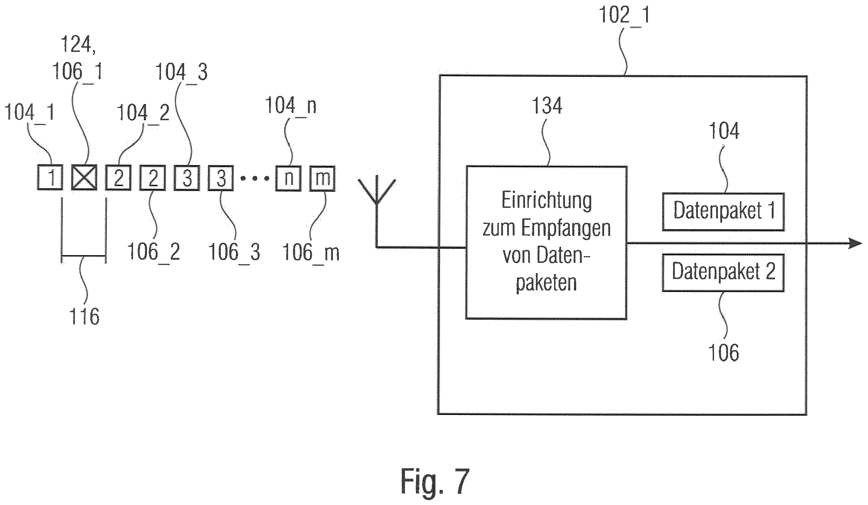

Fig. 7 zeigt eine schematische Ansicht des Datenempfängers 102_1 gemäß einem Ausführungsbeispiel. Der Datenempfänger 102_1 umfasst eine Einrichtung 134 zum Empfangen von Datenpaketen, die ausgebildet ist, um zumindest zwei Sendedatenpakete 104_1 bis 104_n (n kann eine natürlich Zahl größer gleich zwei sein) von einem ersten Datensender 100_1 zu empfangen, die mit einem zeitlichen Abstand 116 über einen Kommunikationskanal gesendet werden und jeweils einen Teil eines ersten Datenpakets 104 enthalten, wobei die Einrichtung 134 zum Empfangen von Datenpaketen ausgebildet ist, um die zumindest zwei Sendedatenpakete 104_1 bis 104_n zu kombinieren, um das erste Datenpaket 104 zu erhalten. Die Einrichtung 134 zum Empfangen von Datenpaketen ist dabei ausgebildet, um in dem zeitlichen Abstand 116 zwischen den zumindest zwei Sendedatenpaketen 104_1 bis 104_n zumindest ein weiteres Datenpaket 124 von dem ersten Datensender 100_1 oder dem zweiten Datensender 100_2 zu empfangen.

Das weitere Sendedatenpaket 124 kann dabei von dem ersten Datensender 100_1 oder dem zweiten Datensender 100_2 mittels eines beliebigen Übertragungsverfahrens (d.h. nicht mit dem Telegram-Splitting-Verfahren) ausgesendet werden.

Natürlich ist es auch möglich, dass das weitere Sendedatenpaket 124 eins von zumindest zwei Sendedatenpaketen ist, mittels denen der erste Datensender 100_1 oder der zweite Datensender 100_2 das zweite Datenpaket 106 aufgeteilt über den Kommunikationskanal zu dem Datenempfänger 102_1 sendet.

Beispielsweise kann die Einrichtung 134 zum Empfangen von Datenpaketen ausgebildet sein, um zumindest zwei Sendedatenpakete 106_1 bis 106_m von dem zweiten Datensender 100_2 zu empfangen (m kann eine natürliche Zahl größer gleich zwei sein), die mit einem zeitlichen Abstand über einen Kommunikationskanal gesendet werden und jeweils einen Teil des zweiten Datenpakets 106 enthalten, wobei die Einrichtung 134 zum Empfangen von Datenpaketen ausgebildet ist, um die zumindest zwei Sendedatenpakete 106_1 bis 106_m von dem zweiten Datensender 100_2 zu kombinieren, um das zweite Datenpaket 106 zu erhalten. In diesem Fall kann eins der zumindest zwei Sendedatenpakete 106_1 bis 106_m das weitere Sendedatenpaket 124 sein.

Wie in Fig. 7 beispielhaft zu erkennen ist, kann die Einrichtung 134 zum Empfangen von Datenpaketen ausgebildet sein, um die zumindest zwei Sendedatenpakete 104_1 bis 104_n von dem ersten Datensender 100_1 und die zumindest zwei Sendedatenpakete 106_1 bis 106_m von dem zweiten Datensender 100_2 abwechselnd in dem zeitlichen Abstand zwischen den Sendedatenpaketen von dem jeweils anderen Datensender zu empfangen.

Ein Teilnehmer (z.B. Datenempfänger 102_1) kann somit zeitlich überlappend von mehreren anderen Teilnehmern (z.B. Datensendern 100_1 bis 100_2) empfangen. Dies ist durch die vergleichsweise langen Pausen im Telegramm-Splitting möglich. Hierbei empfängt der Teilnehmer in einer Pause zwischen zwei Subpakets eine weitere Übertragung von einem anderen Teilnehmer oder mindestens eine weitere Nachricht vom selben Teilnehmer. Diese Übertragung kann ebenfalls mittels Telegramm-Splitting stattfinden, aber auch mit jeder anderen Übertragungstechnik. Wird Telegramm-Splitting verwendet, so können unterschiedliche, oder das gleiche, jedoch zeitlich versetze Subpaket-Muster genutzt werden. Zudem ist es möglich, aber nicht notwendig, die zeitversetzten Subpaket-Muster ebenfalls mit einem Frequenzversatz zu versenden.

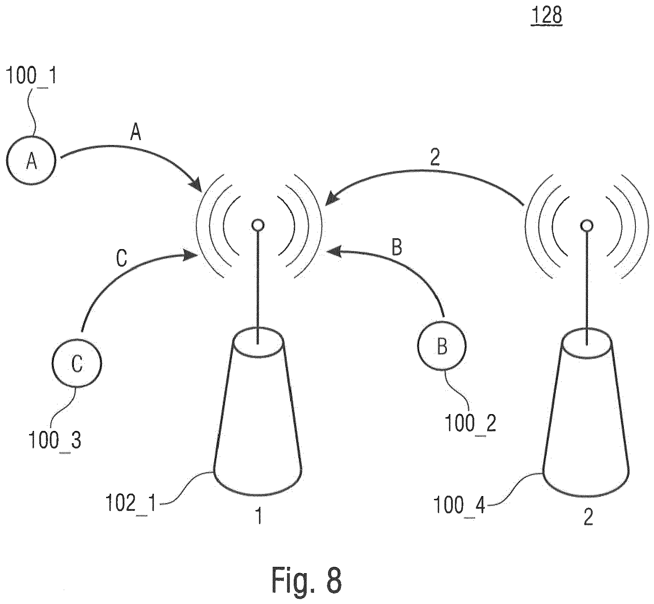

Die Aussendung des ganzen Telegramms (z.B. ersten Datenpakets 104 oder zweiten Datenpakets 106) dauert durch das Sprungmuster / Zeitsprungmuster vergleichsweise lange, da viele Pausen gemacht werden um die Störfestigkeit zu erhöhen. In den Pausen ist es möglich die Übertragung von einem anderen Teilnehmer ebenfalls zu empfangen, wie dies im Folgenden Anhand des in Fig. 8 gezeigten Beispiels eines Systems mit mehreren zeitlich überlappenden Telegrammen erläutert wird.

Fig. 8 zeigt eine schematische Ansicht eines Systems 128 mit dem in Fig. 7 gezeigten Datenempfänger 102_1 und mehreren Datensendern 100_1 bis 100_4, gemäß einem Ausführungsbeispiel. Im Detail sind in Fig. 8 vier Datensender 100_1 bis 100_4 zu erkennen, wobei der Datenempfänger 102_1 von einem ersten Datensender 100_1 ein erstes Datenpaket "A", von einem zweiten Datensender 100_2 ein zweites Datenpaket "B", von dem dritten Datensender 100_3 ein drittes Datenpaket "C", und von dem vierten Datensender 100_4 ein viertes Datenpaket "2" empfängt.

Der Datenempfänger 102_1 kann eine Basisstation sein. Der erste Datensender 100_1, zweite Datensender 100_2 und dritte Datensender 100_3 können Knoten (Sensorknoten) sein, während der vierte Datensender 100_4 eine Basisstation sein kann.

Sollten sich dabei mehrere Telegramme (z.B. Datenpakete) im Zeit- und/oder Frequenzbereich überlappen, so können die gestörten Daten in vielen Fällen mit Hilfe der Fehlerkorrektur korrigiert werden. Die Nutzung von Verfahren wie SIC (SIC = Successive Interference Cancelation, dt. sukzessive Interferenzaufhebung) ist ebenfalls möglich. Verfügt die Empfangsstation über mehrere Empfangsantennen, ist zusätzlich die Nutzung von Beamforming (Strahlformung) bzw. Beamforming-Algorithmen möglich.

### Telegrammaufteilung im gemischten Sende- und Empfangsbetrieb, gemischtes Senden und Empfangen mit zeitlich überlappenden Telegrammen

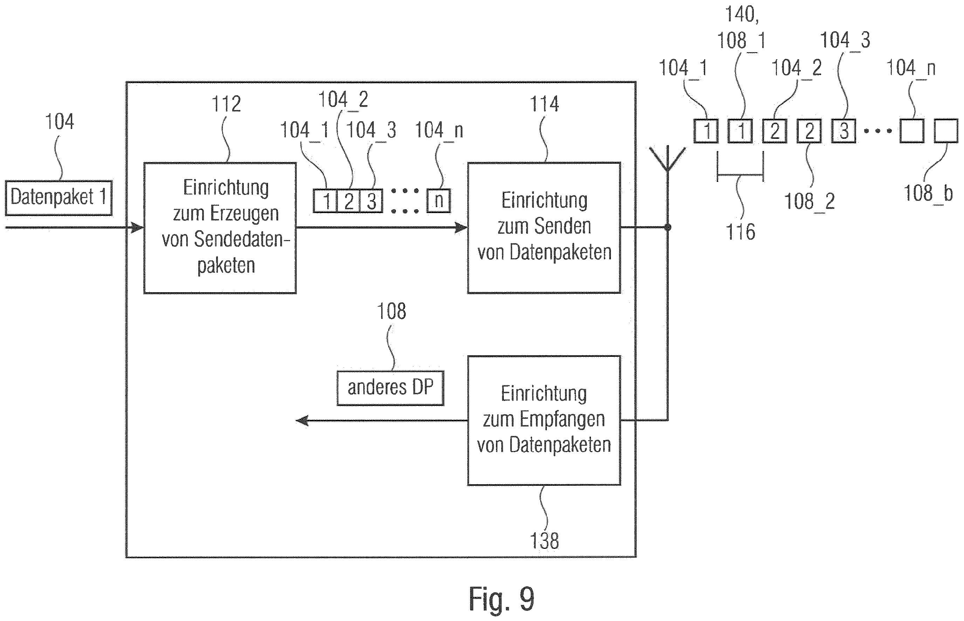

Fig. 9 zeigt eine schematische Ansicht des in Fig. 4 gezeigten Datensenders 100_1 mit einer zusätzlichen Einrichtung 138 zum Empfangen von Datenpaketen, gemäß einem Ausführungsbeispiel. Die nachfolgende Beschreibung gilt in entsprechender Weise auch für den in Fig. 2 gezeigten Datensender 100_1. Bzgl. des Sendepfads des Datensenders 100_1 sei daher auf die obigen Ausführungen verwiesen.

Der Datensender 100_1 kann ein Datensendeempfänger sein, der ferner eine Einrichtung 138 zum Empfangen von Datenpaketen aufweist. Die Einrichtung 138 zum Empfangen von Datenpaketen kann ausgebildet sein, um in dem zeitlichen Abstand 116 zwischen den für den ersten Datenempfänger 102_1 bestimmten Sendedatenpaketen 104_1 bis 104_n ein Sendedatenpaket 140 von einem anderen Datensender 100_2 zu empfangen.

Das Sendedatenpaket 140 von dem anderen Datensender 100_2 kann dabei mittels eines beliebigen Übertragungsverfahrens übermittelt werden. Natürlich kann das Sendedatenpaket 140 auch eins von zumindest zwei Sendedatenpaketen sein, mittels denen der andere Datensender 100_2 ein anderes Datenpaket 108 aufgeteilt zu dem Datensendeempfänger 100_1 übermittelt.

Beispielsweise kann die Einrichtung 138 zum Empfangen von Datenpaketen ausgebildet sein, um in dem zeitlichen Abstand zwischen den für den ersten Datenempfänger 102_1 bestimmten Sendedatenpaketen 104_1 bis 104_n zumindest eins von zumindest zwei Sendedatenpaketen 108_1 bis 108_b (wobei b eine natürliche Zahl größer gleich zwei ist), die von dem anderen Datensender 100_2 gesendet werden, zu empfangen, wobei die zumindest zwei Sendedatenpakete 108_1 bis 108_b von dem anderen Datensender 100_2 mit einem zeitlichen Abstand über den Kommunikationskanal gesendet werden und jeweils einen Teil des anderen Datenpakets 108 enthalten, wobei die Einrichtung 138 zum Empfangen von Datenpaketen ausgebildet ist, um die zumindest zwei Sendedatenpakete 108_1 bis 108_b zu kombinieren, um das andere Datenpaket 108 zu erhalten. In diesem Fall kann eins der zumindest zwei Sendedatenpakete 108_1 bis 108_b von dem anderen Datensender 100_2 das Sendedatenpaket 140 von dem anderen Datensender 100_2 sein.

Ein Teilnehmer (z.B. Sendeempfänger 100_1) kann demnach zeitlich überlappend von mehreren anderen Teilnehmern empfangen und/oder zeitlich überlappend zu mehreren anderen Teilnehmern senden. Dies ist durch die vergleichsweise langen Pausen im Telegramm-Splitting möglich. Hierbei kann die Pause zwischen den Subpakets einer Übertragung der Teilnehmer, unabhängig von ihrer Richtung, genutzt werden um eine weitere Übertragung, ebenfalls unabhängig von ihrer Richtung, durchzuführen.

Grundsätzlich ist es auch möglich, dass die Empfangsstation einen voll-duplex Betrieb unterstützt und damit auf der gleichen Frequenz gleichzeitig senden und empfangen kann. Diese zusätzliche Übertragung kann ebenfalls mittels Telegramm-Splitting stattfinden, aber auch mit jeder anderen Übertragungstechnik.

Wird Telegram-Splitting verwendet, so können unterschiedliche, oder das gleiche, jedoch zeitlich versetze Subpaket-Muster genutzt werden. Zudem ist es möglich, aber nicht notwendig, die zeitversetzten Subpaket-Muster ebenfalls mit einem Frequenzversatz zu versenden.

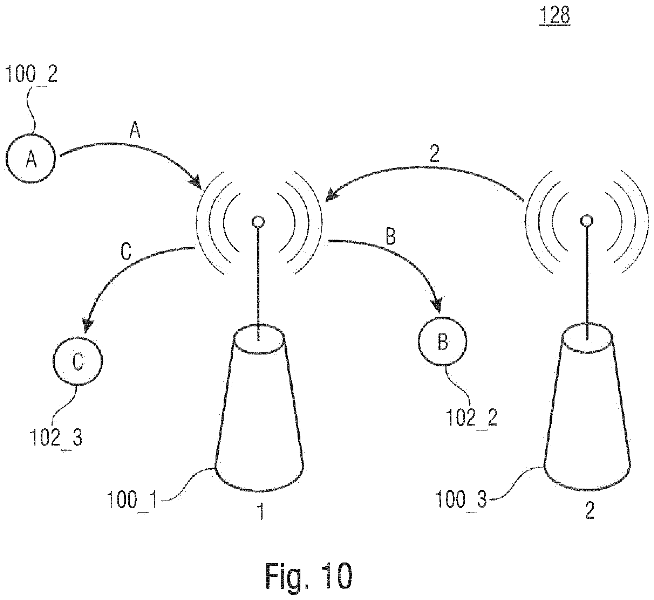

Im Folgenden wird anhand von Fig. 10 das gemischte Senden und Empfangen mit mehreren Teilnehmern näher beschrieben.

Fig. 10 zeigt eine schematische Ansicht eines Systems 128 mit dem in Fig. 9 gezeigten Sendeempfänger 100_1 sowie zwei Datensenders 100_2 und 100_3 und zwei Datenempfängern 102_2 und 102_3, gemäß einem Ausführungsbeispiel. Der Datensendeempfänger 100_1 kann eine erstes Datenpaket "A" von dem zweiten Datensender 100_2 empfangen, ein zweites Datenpaket "B" zu dem zweiten Datenempfänger 102_2 senden, ein drittes Datenpaket "C" zu dem dritten Datenempfänger 102_3 senden und ein viertes Datenpaket "2" von dem dritten Datensender 100 empfangen.

Der Sendeempfänger 100_1 kann eine Basisstation sein. Der zweite Datensender 100_2, der zweite Datenempfänger 102_2, der dritte Datenempfänger 102_3 können Sensorknoten sein, während der dritte Datensender 100_3 eine Basisstation sein kann.

Mit anderen Worten, Fig. 10 zeigt ein beispielhaftes gemischtes Senden und Empfangen von zeitlich überlappenden Telegrammen. Im Detail kann Basisstation 1 (100_1) an Sensorknoten B (102_2) und Sensorknoten C (102_3) senden während zeitgleich Nachrichten von Basisstation 2 (100_3) und Sensorknoten A (100_2) empfangen werden.

Die Basisstation 100_1 möchte somit zu zwei Sensorknoten 102_2 und 102_3 übertragen während sie von einem weiteren Sensorknoten 100_2 und einer Basisstation 100_3 eine Nachricht empfängt.

Die Aussendung des ganzen Telegramms dauert durch das Sprungmuster / Zeitsprungmuster vergleichsweise lange, da viele Pausen gemacht werden um die Störfestigkeit zu erhöhen. In den Pausen ist es möglich die eine weitere Übertragung durchzuführen, siehe Beispiel der Übertragung von mehreren zeitlich überlappenden Telegrammen in Fig. 6.

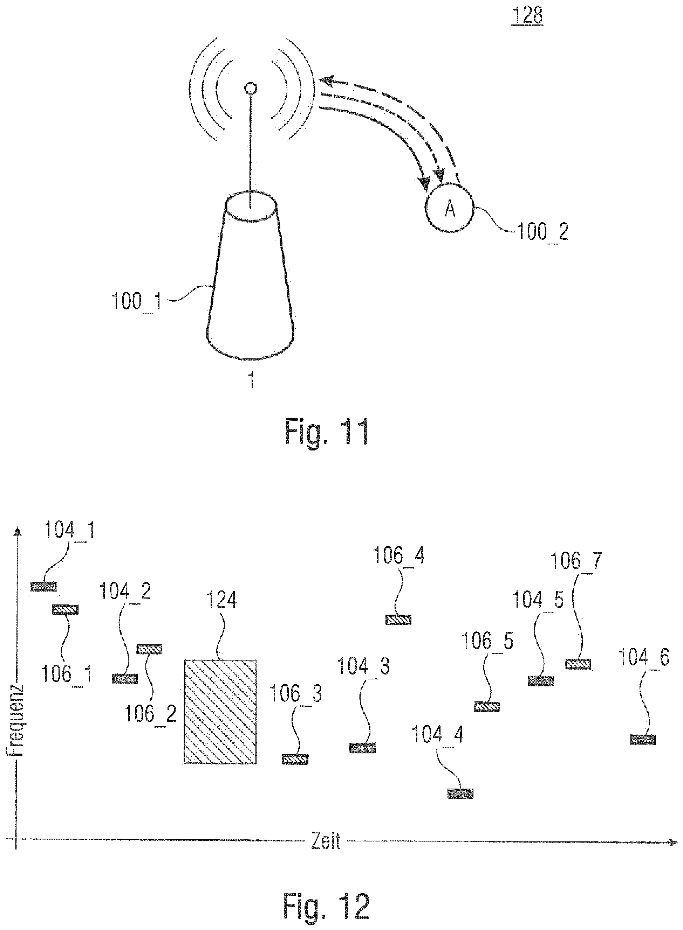

Im Folgenden wird anhand von Fig. 11 und 12 der Duplexbetrieb (Senden und Empfangen zwischen Teilnehmern) näher beschrieben.

Fig. 11 zeigt eine schematische Ansicht eines Systems 128 mit zwei Sendeempfängern 100_1 und 100_2, gemäß einem Ausführungsbeispiel. Fig. 11 lässt sich ein beispielhafter Duplexbetrieb zwischen zwei Teilnehmern entnehmen. Beim Duplexbetrieb sendet und empfängt ein Teilnehmer zeitlich überlappend mit dem gleichen anderen Teilnehmer. Diese Übertragung ist nicht auf Telegram-Splitting oder eine Nachricht je Richtung beschränkt.

Wie in Fig. 11 ferner beispielhaft angedeutet ist, kann der erste Sendeempfänger 100_1 eine Basisstation sein, während der zweite Sendeempfänger 100_2 ein Sensorknoten sein kann. Beispielsweise kann die Basisstation 100_1 zwei Nachrichten (Datenpakete) zu dem Sensorknoten 100_2 senden, während der Sensorknoten eine Nachricht (Datenpaket) zur Basisstation 100_1 sendet.

Fig. 12 zeigt in einem Diagramm eine Belegung des Kommunikationskanals (Übertragungsmediums) für das in Fig. 11 gezeigte System 128, gemäß einem Ausführungsbeispiel. Die Ordinate beschreibt die Frequenz, während die Abszisse die Zeit beschreibt.

Wie in Fig. 12 zu erkennen ist, kann der erste Sendeempfänger 100_1 ausgebildet sein, um das erste Datenpaket 104 aufgeteilt in die zumindest zwei Sendedatenpakete 104_1 bis 104_n zu dem zweiten Sendeempfänger 100_2 zu senden (Telegram-Splitting). Ferner kann der erste Sendeempfänger 100_1 ausgebildet sein, um das weitere Sendedatenpaket 124 zu dem zweiten Sendeempfänger 100_2 in dem zeitlichen Abstand zwischen den zumindest zwei Sendedatenpaketen 104_2 und 104_3 zu senden (anderes Übertragungsverfahren).

Der zweite Sendeempfänger 100_2 kann ausgebildet sein, um das zweite Datenpaket 106 aufgeteilt in die zumindest zwei Sendedatenpakete 106_1 bis 106_m zu dem ersten Datensendeempfänger 100_1 zu senden (Telegram-Splitting).

Die Sendedatenpakete von dem ersten Sendeempfänger und die Sendedatenpakete von dem zweiten Sendeempfänger können dabei in dem zeitlichen Abstand zwischen den jeweils anderen Sendedatenpaketen ausgesendet werden.

### Telegrammaufteilung im Sendepfad, wobei bei der Übertragung an mehrere Teilnehmer überlappende Sendedatenpakete weggelassen werden

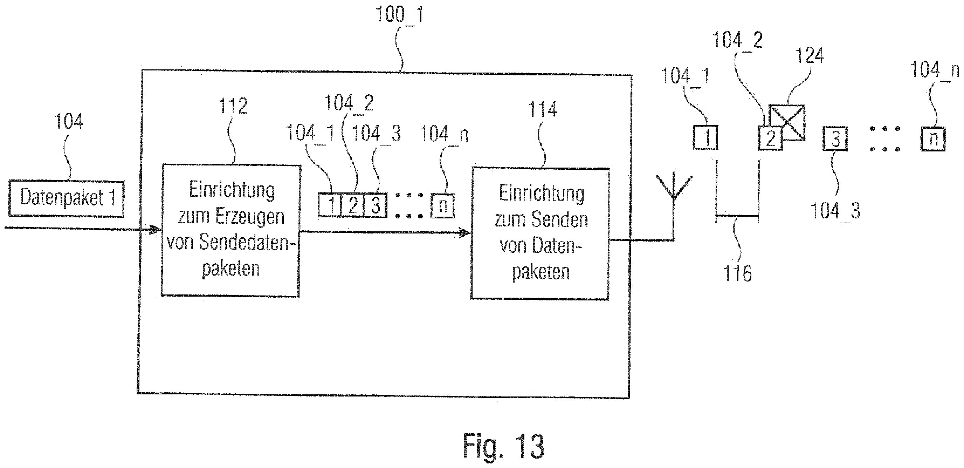

Fig. 13 zeigt eine schematische Ansicht eines Datensender 100_1 gemäß einem Ausführungsbeispiel der vorliegenden Erfindung. Der Datensender 100_1 umfasst eine Einrichtung 112 zum Erzeugen von Sendedatenpaketen, die ausgebildet ist, um das erste Datenpaket 104 in zumindest drei Sendedatenpakete 104_1 bis 104_n (n kann eine natürliche Zahl größer gleich drei sein) aufzuteilen, wobei jedes der zumindest drei Sendedatenpakete 104_1 bis 104_n kürzer ist als das erste Datenpaket 104, wobei die Einrichtung 112 zum Erzeugen von Sendedatenpaketen ausgebildet ist, um die zumindest drei Sendedatenpakete 104_1 bis 104_n derart kanalzucodieren, dass nur ein Anteil der Sendedatenpakete (z.B. nur zumindest zwei der zumindest drei Sendedatenpakete 104_1 bis 104_n) zum Decodieren des ersten Datenpakets 104 erforderlich ist. Ferner umfasst der Datensender eine Einrichtung 114 zum Senden von Datenpaketen, die ausgebildet ist, um die zumindest drei Sendedatenpakete 104_1 bis 104_n über einen Kommunikationskanal mit einem zeitlichen Abstand 116 zu senden. Die Einrichtung 114 zum Senden von Datenpaketen kann dabei ausgebildet sein, um ein zum Senden anstehendes Sendedatenpaket der zumindest drei Sendedatenpakte nicht, nur teilweise oder später zu senden wenn zu dem Zeitpunkt des Sendes des einen Sendedatenpakets ein weiteres Sendedatenpaket 124 zum Senden ansteht.

Bei Ausführungsbeispielen kann der Datensender somit, wenn z.B. zu dem Zeitpunkt des Sendes des einen Sendedatenpakets ein weiteres Sendedatenpaket zum Senden ansteht, das zum Senden anstehende Sendedatenpaket der zumindest drei Sendedatenpakete nicht, nur teilweise oder später über den Kommunikationskanal senden. Bedingt durch die verwendete Kanalcodierung, mit der die Sendedatenpakete kanalcodiert sind, ist es sogar möglich, eines (oder mehrere) der Sendedatenpakete nicht oder nur teilweise auszusenden, ohne dass hierbei ein Datenverlust bzw. Informationsverlust entsteht, da nur ein Anteil, d.h. nicht alle, der Sendedatenpakete zum Decodieren des ersten Datenpakets erforderlich sind.

Wie in Fig. 13 beispielhaft zu erkennen ist, kann zu dem Zeitpunkt des zweiten Sendedatenpakets 104_2 das weitere Sendedatenpaket 124 zum Senden anstehen. In diesem Fall kann die Einrichtung 114 zum Senden von Datenpaketen das zweite Sendedatenpaket nicht, nur teilweise oder später senden.

Bei Ausführungsbeispielen kann die Einrichtung 114 zum Senden von Datenpaketen ausgebildet sein, um das weitere Sendedatenpaket 124 über den Kommunikationskanal zu senden. Mit anderen Worten, der Datensender 100_1 kann das weitere Sendedatenpaket 124 selbst senden.

Das weitere Sendedatenpaket 124 kann mittels eines beliebigen Übertragungsverfahrens übermittelt werden. Natürlich ist es auch möglich, dass das weitere Sendedatenpaket 124 eins von zumindest drei Sendedatenpaketen 106_1 bis 106_m ist, mittels derer das zweite Datenpaket 106 aufgeteilt gesendet wird.

Beispielsweise können die zumindest drei Sendedatenpakete 104_1 bis 104_n für einen ersten Datenempfänger 102_1 bestimmt sein. Die Einrichtung 112 zum Erzeugen von Sendedatenpaketen kann dabei ausgebildet sein, um ein zweites für einen zweiten Datenempfänger 102_2 bestimmtes Datenpaket 106 in zumindest drei Sendedatenpakete 106_1 bis 106_m (m kann eine natürlich Zahl größer gleich drei sein) aufzuteilen, wobei jedes der für den zweiten Datenempfänger 102_2 bestimmten Sendedatenpakete 106_1 bis 106_m kürzer ist als das zweite Datenpaket 106, wobei die Einrichtung 112 zum Erzeugen von Datenpaketen ausgebildet sein kann, um die zumindest drei für den zweiten Datenempfänger 102_2 bestimmten Sendedatenpakete 106_1 bis 106_m derart kanalzucodieren, dass nur ein Anteil der Sendedatenpakete zum Decodieren des zweiten Datenpakets 106 erforderlich ist. Die Einrichtung 114 zum Senden von Datenpaketen kann ausgebildet sein, um die zumindest drei für den zweiten Datenempfänger 102_2 bestimmten Sendedatenpakete 106_1 bis 106_m mit einem zeitlichen Abstand über den Kommunikationskanal zu senden. In diesem Fall kann eins der zumindest drei für den zweiten Datenempfänger 102_2 bestimmten Sendedatenpakete das weitere Sendedatenpaket 124 sein.

Bei Ausführungsbeispielen kann das weitere Sendedatenpaket 124 auch von einem anderen Datensender 100_2 gesendet werden. Dem Datensender 100_1 kann der Zeitpunkt des Sendens des weiteren Sendedatenpakets 124 durch den anderen Datensender 100_2 bekannt sein.

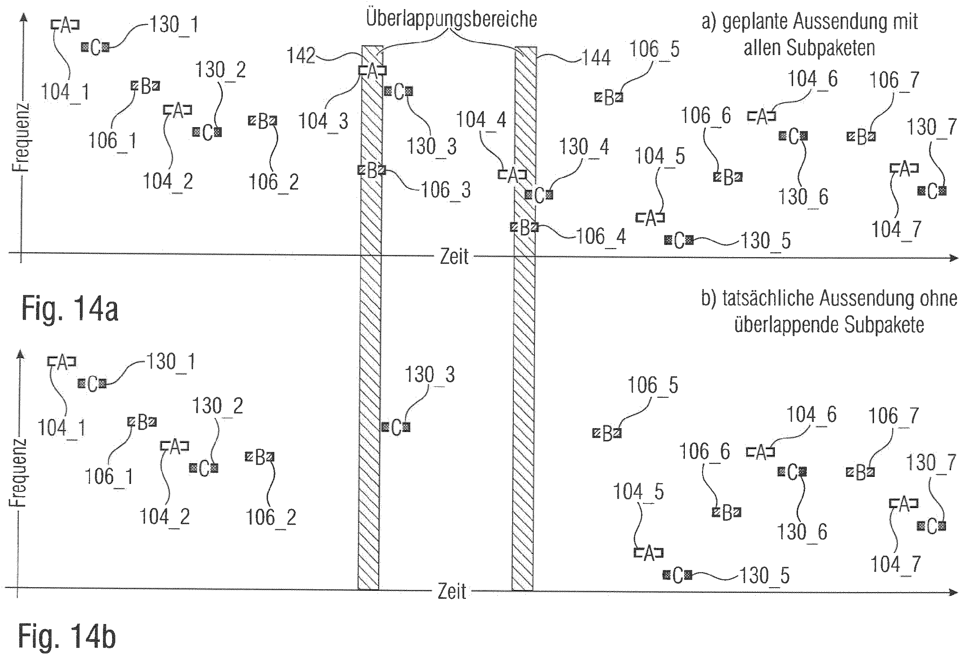

Fig. 14a zeigt in einem Diagramm eine Belegung des Kommunikationskanals (Übertragungsmediums) mit den zum Senden anstehenden (geplanten) Sendedatenpaketen, während Fig. 14b in einem Diagramm eine Belegung des Kommunikationskanals mit den tatsächlich ausgesendeten Sendedatenpaketen zeigt. In Fig. 14a und 14b beschreibt die Ordinate jeweils die Frequenz, während die Abszisse jeweils die Zeit beschreibt.

Wie in Fig. 14a zu erkennen ist, kann das erste Datenpaket 104 aufgeteilt in die Sendedatenpakete 104_1 bis 104_n, das zweite Datenpaket 106 aufgeteilt in die Sendedatenpakete 106_1 bis 106_m, und das dritte Datenpaket aufgeteilt in die Sendedatenpakete 130_1 bis 130_i jeweils mit einem zeitlichen Abstand in den zeitlichen Abständen zwischen den jeweils anderen Sendedatenpaketen gesendet werden.

Wie in Fig. 14a ferner zu erkennen ist, würde die geplante Aussendung der Sendedatenpakete zu zwei Überlappungsbereichen 142 und 144 führen. In einem ersten Überlappungsbereich überlappen sich die Sendedatenpakete 104_3 und 106_3, während sich in dem zweiten Überlappungsbereich die Sendedatenpakete 104_4, 106_4 und 130_4 überlappen, weshalb die genannten Sendedatenpakete nicht gesendet werden, wie dies in Fig. 14b zu erkennen ist.

Ein Teilnehmer kann also zeitlich überlappend zu mehreren anderen Teilnehmern funken. Die Zeitsprungmuster können sich dabei mit hoher Wahrscheinlichkeit für einige Sendedatenpakete überlappen. Der Sender kann Kenntnis darüber haben welche Subpakete (Sendedatenpakete) sich überlappen werden (siehe Fig. 14a). Die überlappenden Subpakete können nicht ausgesendet werden (siehe Fig. 14b) da die Empfänger das Fehlen der Subpakets detektieren können und diese Information verarbeiten können - also das Subpaket als fehlende Information werten.

Dieses Vorgehen kann besser sein, als eines der Subpakete an einen bestimmten Empfänger auszusenden, da die anderen mindestens einen Teilnehmer, die an dieser Stelle auch ein Subpaket erwarten, ggf. nicht feststellen können, dass das Subpaket nicht für sie bestimmt war und somit ein Subpaket empfangen das für die Dekodierung seines Telegramms unbrauchbare Information beinhaltetet. Falsche Information ist für die Fehlerschutzdekodierung schlechter, als keine Information.

Bei Ausführungsbeispielen kann die Einrichtung 114 zum Senden von Datenpaketen ausgebildet sein, um das zum Senden anstehendes Sendedatenpaket der zumindest drei Sendedatenpakte 104_1 bis 104_n nur dann nicht, nur teilweise oder später zu senden, wenn das weitere Sendedatenpaket zusätzlich ein Übertragungskriterium erfüllt.

Beispielsweise kann das Übertragungskriterium angeben, dass das weitere Sendedatenpaket 124 eine höhere Sendepriorität aufweist, als das zum Senden anstehende Sendedatenpaket der zumindest drei Sendedatenpakte 104_1 bis 104_n.

Des Weiteren kann das Übertragungskriterium angeben, dass das zum Senden anstehende Sendedatenpaket 104_1 bis 104_n und das weitere Sendedatenpaket 124 in dem gleichen Frequenzkanal gesendet werden.

Überlappen sich zwei Subpakete zwar im Zeit-, aber nicht im Frequenzbereich, können in der Regel beide Subpakete übertragen werden und ein Weglassen ist nicht notwendig. Auch wenn sich Signale nur zeitlich und nicht im Frequenzbereich überlappen, kann sich trotzdem die Notwendigkeit ergeben, dass nur ein Signal gesendet wird, z.B. wenn der Sender technisch bedingt nur ein Subpaket gleichzeitig aussenden kann, auch wenn sich diese im Frequenzbereich nicht überlagern.

Eine Entscheidung welche Subpakete weggelassen werden kann sich aus verschiedenen Parametern ergeben. Beispielsweise aus der Kanaldämpfung zum Empfänger oder aus der Anzahl der bereits weggelassener Subpakete.

### Telegrammaufteilung im Sendepfad, wobei überlappende Sendedatenpakete nur gesendet werden, falls dieses für die Dekodierung von bestimmten Teilnehmern von Vorteil ist

Wie bereits erwähnt wurde, kann die Einrichtung 114 zum Senden von Datenpaketen ausgebildet sein, um das zum Senden anstehendes Sendedatenpaket der zumindest drei Sendedatenpakte 104_1 bis 104_n nur dann nicht, nur teilweise oder später zu senden, wenn das weitere Sendedatenpaket zusätzlich ein Übertragungskriterium erfüllt.

Das Übertragungskriterium kann beispielsweise angeben, dass die Übertragung des weiteren Sendedatenpakets 124 eine Decodierung des ersten Datenpakets 104 durch einen Datenempfänger basierend auf den anderen Sendedatenpaketen der zumindest drei Sendedatenpakete 104_1 bis 104_n mit einer Wahrscheinlichkeit von zumindest 90% (oder 70%, oder 80% oder 95%) dennoch möglich ist. Für die Ermittlung der Wahrscheinlichkeit kann beispielsweise eine Kanalqualität berücksichtigt werden. Ferner kann bei der Ermittlung der Wahrscheinlichkeit eine Anzahl zuvor nicht ausgesendeter Sendedatenpakete der zumindest drei Sendedatenpakete 104_1 bis 104_n berücksichtigt werden.

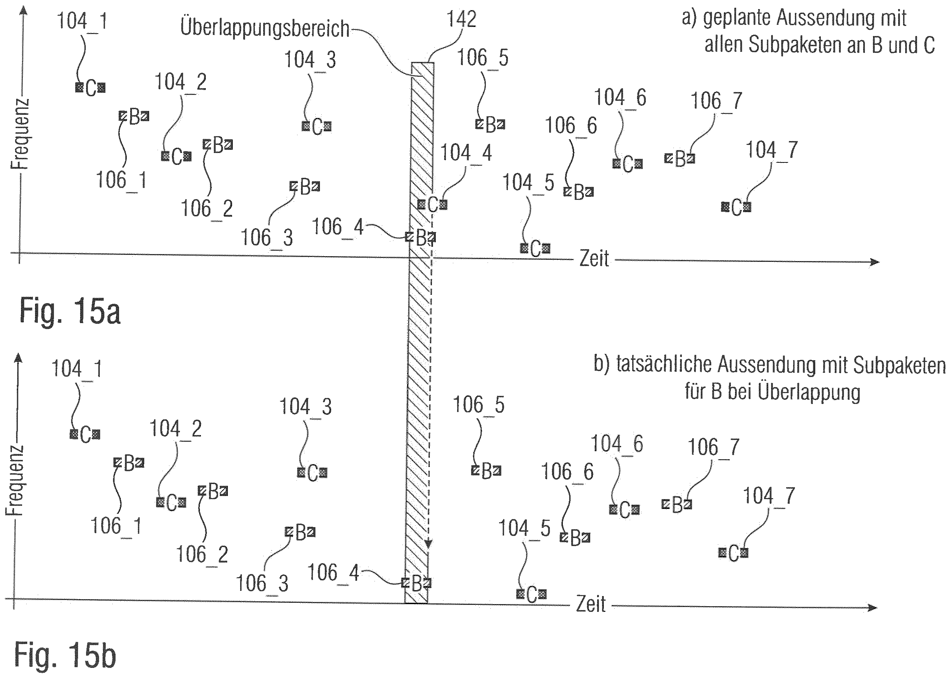

Fig. 15a zeigt in einem Diagramm eine Belegung des Kommunikationskanals (Übertragungsmediums) mit den zum Senden anstehenden (geplanten) Sendedatenpaketen, während Fig. 15b in einem Diagramm eine Belegung des Kommunikationskanals mit den tatsächlich ausgesendeten Sendedatenpaketen zeigt. In Fig. 15a und 15b beschreibt die Ordinate jeweils die Frequenz, während die Abszisse jeweils die Zeit beschreibt.

Wie in Fig. 15a zu erkennen ist, kann das erste Datenpaket 104 aufgeteilt in die Sendedatenpakete 104_1 bis 104_n und das zweite Datenpaket 106 aufgeteilt in die Sendedatenpakete 106_1 bis 106_m jeweils mit einem zeitlichen Abstand in den zeitlichen Abständen zwischen den jeweils anderen Sendedatenpaketen gesendet werden.

Wie in Fig. 15a ferner zu erkennen ist, würde die geplante Aussendung der Sendedatenpakete zu einem Überlappungsbereichen 142 in dem sich die Sendedatenpakete 104_4 und 106_4 überlappen. Wie in Fig. 15b zu erkennen ist, wird das Sendedatenpaket 104_4 nicht gesendet.

Ein Teilnehmer kann also zeitlich überlappend zu mehreren anderen Teilnehmern funken. Die Zeitsprungmuster können sich mit hoher Wahrscheinlichkeit für einige Subpakete zeitlich überlappen. Bei überlappenden Subpaketen wird nur dann ein Subpaket ausgesendet, wenn dieses von der Basisstation als wichtig für einen Teilnehmer und als nicht sehr störend für den anderen Teilnehmer gewertet wird.

Die Bewertung der Störung kann z.B. anhand der Kanalqualität zwischen den Teilnehmern in der Vergangenheit geschehen. Für den Fall dass der Kanal zwischen zwei Teilnehmern (z.B. A und C) sehr gut war, ist die Wahrscheinlichkeit einen Teilnehmer (z.B. C) durch eine Aussendung an den anderen Teilnehmer (z.B. B) zu stören sehr gering. Ist der Kanal zwischen zwei Teilnehmern (z.B. A und B) schon immer kritisch, so würde eine Zusätzliche Störung durch das Aussenden des Subpakets an den einen Teilnehmer (z.B. C) im Überlappungsfall die Empfangsqualität der Nachricht an den anderen Teilnehmer (z.B. B) noch weiter verringert werden. Ein weiteres Kriterium zur Bewertung kann auch die Anzahl der bereits weggelassenen Subpakets eines Telegrams sein.

Somit kann, wie in Fig. 15a und 15b gezeigt ist, ein Subpaket mit einem geringem Störpotential im Überlappungsfall trotzdem ausgesendet werden. Wie in Fig. 15a gezeigt ist, sind Aussendung an zwei Teilnehmer (z.B. C und B) geplant, welche in einem Subpaket teilweise überlappen (siehe Fig. 15a). Da der Kanal zu einem Teilnehmer (z.B. C als) wenig störanfällig eingestuft wird, kann in der Überlappung der Subpaket für den einen Teilnehmer (z.B. C) ausgelassen werden und der Subpaket für den anderen Teilnehmer (z.B. B) ausgesendet werden.

### Telegrammaufteilung im Sendepfad, wobei Sendedatenpakete in Abhängigkeit von äußeren Gegebenheiten weggelassen werden

In Abwandlung des in Fig. 3 gezeigten Datensenders 100_1, dessen Einrichtung zum Senden von Datenpaketen ausgebildet ist, um überlappende Sendedatenpakete nicht, nur teilweise oder später zu senden, kann die Einrichtung zum Senden von Datenpaketen stattdessen (oder ferner) ausgebildet sein, um ein zum Senden anstehendes Sendedatenpaket der zumindest drei Sendedatenpakte in Abhängigkeit von äußeren Gegebenheiten nicht, nur teilweise oder später zu senden.

Der Datensender (z.B. Basisstation) 100_1 kann demnach einzelne Sendedatenpakete nicht, nur teilweise oder später senden, wenn diese bedingt durch äußere Gegebenheiten (z.B. regulatorische Gegebenheiten, wie z.B. eines Gesamt Duty Cycles, oder durch Meldung eines Primärnetzes (z.B. UMTS)) nicht senden sollte.

### Telegrammaufteilung im Sende- oder Empfangspfad, mit einem an den Kanal anqepassten Sprunqmuster

Die Einrichtung 114 zum Senden von Datenpaketen kann ausgebildet sein, um den zeitlichen Abstand zwischen den Sendedatenpaketen, den Frequenzkanal bzw. Frequenzkanäle auf die die Sendedatenpakete verteilt werden oder das nicht aussenden eines Sendedatenpakets in Abhängigkeit von einer Qualität oder Belegung des Kommunikationskanals anzupassen. Mit anderen Worten, die Einrichtung 114 zum Senden von Datenpaketen kann ausgebildet sein, um das verwendete Sprungmuster an eine Qualität oder Belegungen des Kommunikationskanals anzupassen.

Ferner kann der Datensender (oder Datensendeempfänger) 100_1 ausgebildet sein, um unter Verwendung eines weiteren Sendedatenpakets den Sendezeitpunkt zumindest eines der Sendedatenpakete oder zumindest einen zeitlichen Abstand zwischen zwei der Sendedatenpakete auszusenden. Mit anderen Worten, der Datensender 100_1 kann ausgebildet sein, um das eigene Sprungmuster anderen Datensendern mitzuteilen, z.B. unter Verwendung eines entsprechenden Sendedatenpakets mit Informationen über das Sprungmuster.

Es ist auch möglich, dass der Datensender ausgebildet ist, um unter Verwendung eines weiteren Sendedatenpakets einem anderen Datensender einen Sendezeitpunkt, zu dem der andere Datensender ein Sendedatenpaket aussendet, oder einen zeitlichen Abstand zwischen zwei von dem anderen Datensender ausgesendeten Sendedatenpaketen vorzugeben. Mit anderen Worten, ein Datensender (z.B. eine Basisstation) kann einem anderen Datensender das zu verwendende Sprungmuster vorgeben.

Die Auswahl des zu verwendenden Sprungmusters für die Versendung ist frei wählbar. Um optimale Leistung zu erreichen, kann das Sprungmuster so gewählt werden, dass sie eine bessere Performance für den erwarteten Übertragungskanal für die Übertragung liefert als eine zufällig gewählte. Zur Bestimmung eines besseren Sprungmusters kann der Teilnehmer auf selbst gesammelte oder ihm extern zugetragene Informationen zum derzeitigen Kanals sowie aus der Vergangenheit zurückgreifen (z.B. Funkkanalsituation der vorhergehenden Sekunden, Generelle Kanalsituation in dieser Umgebung, Situation zur selben Uhrzeit letzte Woche, usw.).

In Verbindung mit der Möglichkeit einem anderen Teilnehmer das zu verwendende Sprungmuster mitzuteilen kann die Kanalschätzung und Musterselektion alleinig einem Teilnehmer überlassen werden.

### Telegrammaufteilung für simultanes Senden und Empfangen, wobei auszusendende Sendedatenpakete (Subpakete), die mit benötigten Sendedatenpaketen (Empfangssubpakete) kollidieren, ausgelassen werden

Die Aussendung eines Subpakets eines Teilnehmers kann sich mit dem Empfang eines Subpakets von einem anderen Teilnehmer überlappen. Der Empfänger wäre für den Empfang des Subpakets während der Aussendung des anderen Subpakets blind.

Um das Subpaket dennoch zu empfangen ist es nötig das Aussenden des Subpakets auszusetzen. Eine Entscheidung über das Aussetzen kann z.B. anhand von Informationen wie der Kanaldämpfung zum Empfänger und der bereits ausgesetzten Anzahl von Subpaketen entschieden werden.

Beispielsweise kann die Uplink-Übertragung als wichtig eingestuft werden, z.B. höher priorisiertes Sprungmuster. Die Basisstation kann jetzt zu entsprechenden Empfangszeitpunkten des Uplink des Sensorknotens die Aussendung der Downlink-Nachricht unterbrechen und somit den Empfang des Sensorknoten-Telegramms sicherstellen ohne dabei die eigene Downlink-Nachricht signifikant zu kompromittieren.

### Telegrammaufteilung im Sende- oder Empfangspfad, priorisierte Telegramme können beim Senden und Empfangen bevorzugt werden

Ein Teilnehmer kann ein als hoch priorisiertes Telegramm zu versenden oder zu empfangen haben. Alle überlappenden Subpakete anderer Telegramme, egal ob in Sende oder Empfangsrichtung können zu Gunsten dieses priorisierten Telegramms vernachlässigt werden.

Aussendungen, die mit dem Empfang eines Subpakets des priorisierten Telegramms überlappen, können ausgesetzt werden. Aussendung oder Empfang eines Subpakets eines nicht-priorisierten Telegramms kann bei Überlappung immer ausgesetzt und stattdessen das Subpaket des priorisierten Telegramms versendet werden.

### Telegrammaufteilung im Sendepfad, Sendeleistung des Telegramm-Aufteilungs-Verfahrens wird an Teilnehmer angepasst

Die Einrichtung zum Empfangen von Datenpaketen des Datensendeempfängers 100_1 kann ferner ausgebildet sein, um ein Datenpaket von dem ersten Datenempfänger zu empfangen und um eine Empfangsleistung zu ermitteln, wobei der Datensendeempfängers 100_1 ausgebildet sein kann, um eine Sendeleistung mit der die Sendedatenpakete zu dem ersten Datenempfänger gesendet werden in Abhängigkeit von der ermittelten Empfangsleistung anzupassen.

Ein Teilnehmer (z.B. A) kann somit die Feldstärke mit der Telegramme von anderen Teilnehmern ankommen messen. Die Sendeleistung des eigenen Telegramms an die anderen Teilnehmer kann nun angepasst werden.

Um den Funkkanal minimal zu belasten ist es möglich die Sendeleistung auf ein Minimum zu reduzieren. So wird an Teilnehmer die man selbst mit hoher Leistung empfangen hat nur mit geringer Leistung zurückgesendet, da der Funkkanal offensichtlich sehr gut ist. Verringert sich die Leistung mit der man einen anderen Teilnehmer empfangen hat, so ist es nötig mit einer höheren Leistung zurückzusenden. Zusätzlich oder alternativ können auch Subpakete weggelassen werden, da die Nutzung der Fehlerkorrektur ggf. nicht den Empfang aller Subpakete benötigt.

Werden viele Teilnehmer mit gleicher Sendeleistung Empfangen und es ist nötig mit einem ähnlichen Sprungmuster mehreren Teilnehmer simultan zu antworten, so kann durch entsprechendes Anpassen der Sendeleistung an die einzelnen Teilnehmer erreichen werden, dass die Teilnehmer Ihre Telegramme von den anderen ausgesandten Telegrammen anhand des Pegels besser unterscheiden können. So kann die Identifizierbarkeit verbessert (oder sogar maximiert) werden.

Beispielsweise kann eine Basisstation zeitlich überlappend zu mehreren Sensorknoten senden, z.B. zu einem ersten Sensorknoten (A) und einem zweiten Sensorknoten (B), wobei Übertragungen von dem ersten Sensorknoten (A) mit geringer und Übertragungen von dem zweiten Sensorknoten (B) mit hoher Feldstärke ankommen. Die Basisstation kann dann Subpakete an den ersten Sensorknoten (A) mit hoher Leistung und Subpakete an den zweiten Sensorknoten (B) mit geringer Leistung senden. Bei überlappenden Subpaketen können Subpakete für den ersten Sensorknoten (A) ausgesendet werden. Der zweite Sensorknoten (B) kann detektieren, dass ein Subpaket nicht für den zweiten Sensorknoten (B) bestimmt war, wenn die Feldstärke höher als bei anderen Subpaketen ist.

### Sonstiges

Neben der Punkt zu Punkt Kommunikation können auch Broadcast (BC) oder Multicast (MC) Übertragungen von einem Teilnehmer zu mehreren (=MC) oder allen (=BC) Teilnehmern gleichzeitig stattfinden. Deshalb kann es spezielles BC/MC-Sprungmuster geben, die für alle Teilnehmer gleich sind und individuelle Sprungmuster für jeden Teilnehmer. Je nachdem welche Telegramme Priorität haben, können bei Überlappungen von Subpaketen einzelne Subpakete entweder von der BC/MC Übertragung oder den individuellen Telegrammen weggelassen werden.

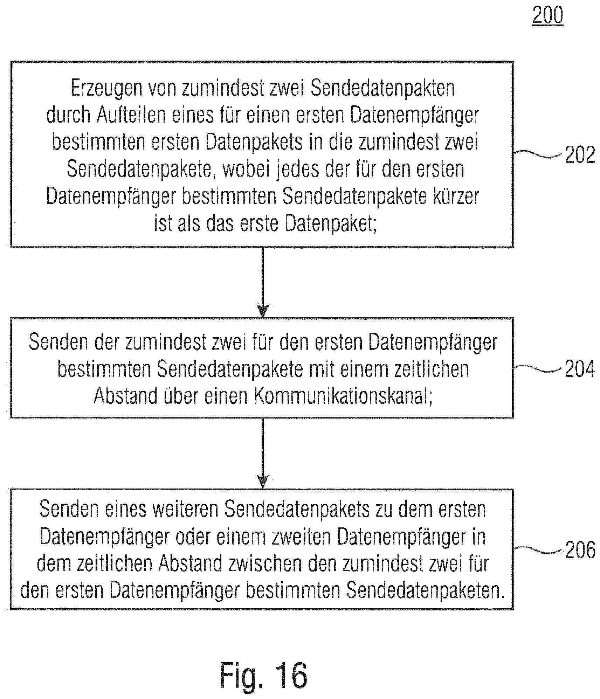

Fig. 16 zeigt ein Flussdiagramm eines Verfahrens 200 zum Senden von Datenpaketen, gemäß einem Ausführungsbeispiel. Das Verfahren 200 umfasst einen Schritt 202 des Erzeugens von zumindest zwei Sendedatenpakten durch Aufteilen eines für einen ersten Datenempfänger bestimmten ersten Datenpakets in die zumindest zwei Sendedatenpakete, wobei jedes der für den ersten Datenempfänger bestimmten Sendedatenpakete kürzer ist als das erste Datenpaket; einen Schritt 204 des Sendens der zumindest zwei für den ersten Datenempfänger bestimmten Sendedatenpakete mit einem zeitlichen Abstand über einen Kommunikationskanal; und einen Schritt 206 des Sendens eines weiteren Sendedatenpakets zu dem ersten Datenempfänger oder einem zweiten Datenempfänger in dem zeitlichen Abstand zwischen den zumindest zwei für den ersten Datenempfänger bestimmten Sendedatenpaketen.

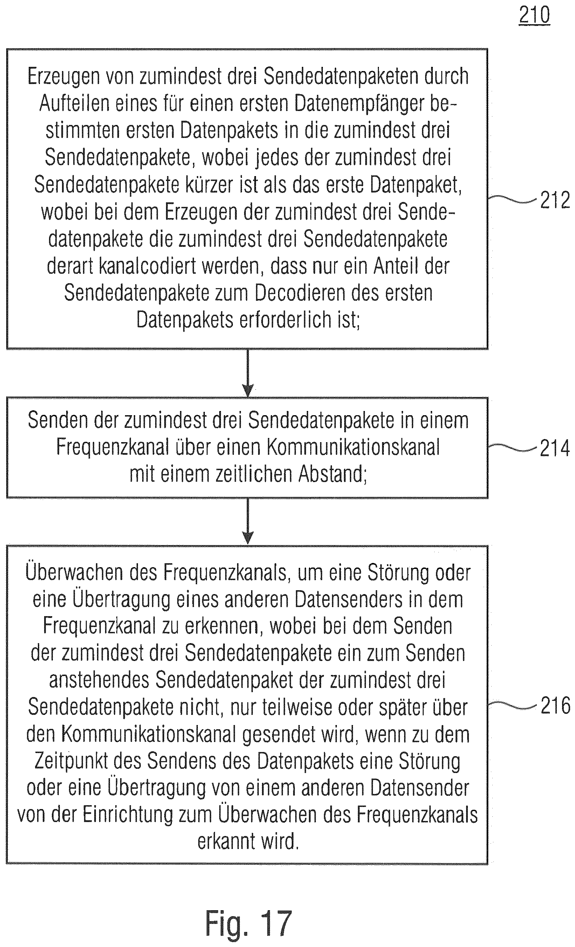

Fig. 17 zeigt ein Flussdiagramm eines Verfahrens 210 zum Senden von Datenpaketen, gemäß einem Ausführungsbeispiel. Das Verfahren 210 umfasst einen Schritt 212 des Erzeugens von zumindest drei Sendedatenpaketen durch Aufteilen eines für einen ersten Datenempfänger bestimmten ersten Datenpakets in die zumindest drei Sendedatenpakete, wobei jedes der zumindest drei Sendedatenpakete kürzer ist als das erste Datenpaket, wobei bei dem Erzeugen der zumindest drei Sendedatenpakete die zumindest drei Sendedatenpakete derart kanalcodiert werden, dass nur ein Anteil der Sendedatenpakete zum Decodieren des ersten Datenpakets erforderlich ist; einen Schritt 214 des Sendens der zumindest drei Sendedatenpakete in einem Frequenzkanal über einen Kommunikationskanal mit einem zeitlichen Abstand; und einen Schritt 216 des Überwachens des Frequenzkanals, um eine Störung oder eine Übertragung eines anderen Datensenders in dem Frequenzkanal zu erkennen; wobei bei dem Senden der zumindest drei Sendedatenpakete ein zum Senden anstehendes Sendedatenpaket der zumindest drei Sendedatenpakte nicht, nur teilweise oder später über den Kommunikationskanal gesendet wird, wenn zu dem Zeitpunkt des Sendens des Datenpakets eine Störung oder eine Übertragung von einem anderen Datensender von der Einrichtung zum Überwachen des Frequenzkanals erkannt wird.

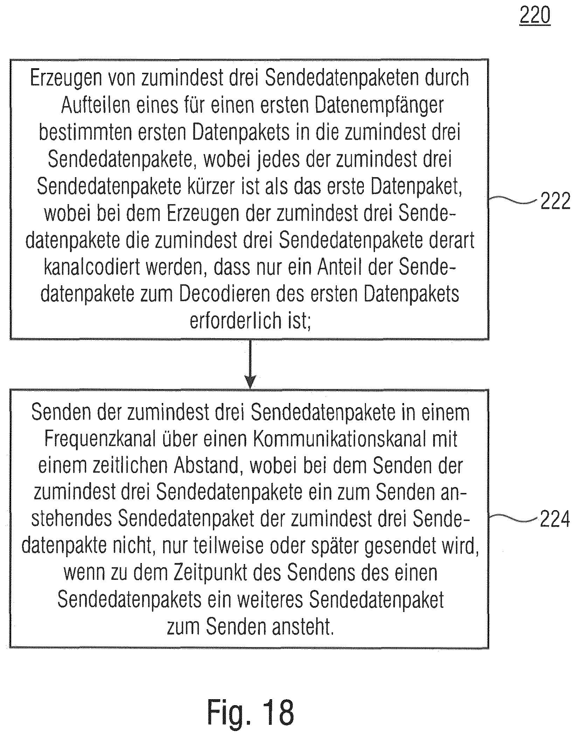

Fig. 18 zeigt ein Flussdiagramm eines Verfahrens 220 zum Senden von Datenpaketen, gemäß einem Ausführungsbeispiel. Das Verfahren 220 umfasst einen Schritt 222 des Erzeugens von zumindest drei Sendedatenpaketen durch Aufteilen eines für einen ersten Datenempfänger bestimmten ersten Datenpakets in die zumindest drei Sendedatenpakete, wobei jedes der zumindest drei Sendedatenpakete kürzer ist als das erste Datenpaket, wobei bei dem Erzeugen der zumindest drei Sendedatenpakete die zumindest drei Sendedatenpakete derart kanalcodiert werden, dass nur ein Anteil der Sendedatenpakete zum Decodieren des ersten Datenpakets erforderlich ist; und einen Schritt 224 des Sendens der zumindest drei Sendedatenpakete in einem Frequenzkanal über einen Kommunikationskanal mit einem zeitlichen Abstand; wobei bei dem Senden der zumindest drei Sendedatenpakete ein zum Senden anstehendes Sendedatenpaket der zumindest drei Sendedatenpakte nicht, nur teilweise oder später gesendet wird, wenn zu dem Zeitpunkt des Sendes des einen Sendedatenpakets ein weiteres Sendedatenpaket zum Senden ansteht.

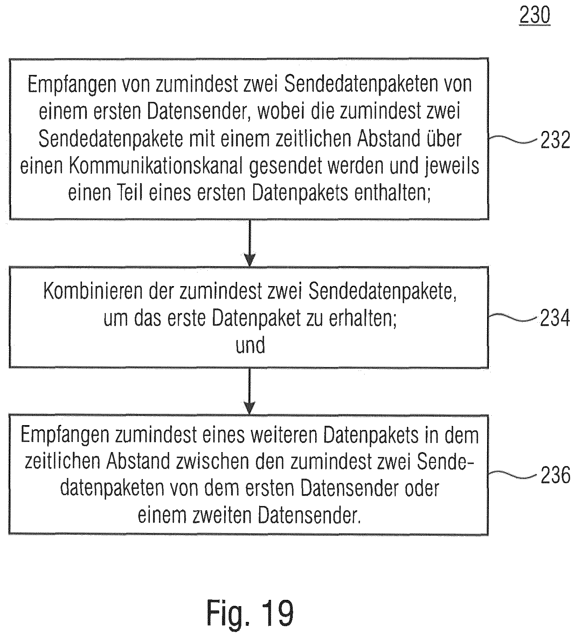

Fig. 19 zeigt ein Flussdiagramm eines Verfahrens 230 zum Empfangen von Datenpaketen, gemäß einem Ausführungsbeispiel. Das Verfahren 230 umfasst einen Schritt 232 des Empfangens von zumindest zwei Sendedatenpaketen von einem ersten Datensender, wobei die zumindest zwei Sendedatenpakete mit einem zeitlichen Abstand über einen Kommunikationskanal gesendet werden und jeweils einen Teil eines ersten Datenpakets enthalten; einen Schritt 234 des Kombinierens der zumindest zwei Sendedatenpakete, um das erste Datenpaket zu erhalten; und einen Schritt 236 des Empfangens zumindest eines weiteren Datenpakets in dem zeitlichen Abstand zwischen den zumindest zwei Sendedatenpaketen von dem ersten Datensender oder einem zweiten Datensender.

Gemäß einem ersten Aspekt weist ein Datensender 100_1 folgende Merkmale auf: eine Einrichtung 112 zum Erzeugen von Sendedatenpaketen, die ausgebildet ist, um ein erstes für einen ersten Datenempfänger 102_1 bestimmtes Datenpaket 104 in zumindest zwei Sendedatenpakete 104_1-104_n aufzuteilen, wobei jedes der für den ersten Datenempfänger 102_1 bestimmten Sendedatenpakete 104_1-104_n kürzer ist als das erste Datenpaket 104; eine Einrichtung 114 zum Senden von Datenpaketen, die ausgebildet ist, um die zumindest zwei für den ersten Datenempfänger 102_1 bestimmten Sendedatenpakete 104_1-104_n mit einem zeitlichen Abstand 116 über einen Kommunikationskanal zu senden; wobei die Einrichtung 114 zum Senden von Datenpaketen ausgebildet ist, um zumindest ein weiteres Sendedatenpaket 124 zu dem ersten Datenempfänger 102_1 oder einem zweiten Datenempfänger 102_2 in dem zeitlichen Abstand 116 zwischen den zumindest zwei für den ersten Datenempfänger 102_1 bestimmten Sendedatenpaketen 104_1-104_n zu senden.

Gemäß einem zweiten Aspekt unter Bezugnahme auf den ersten Aspekt ist die Einrichtung 112 zum Erzeugen von Sendedatenpaketen ausgebildet, um ein zweites 106 für den zweiten Datenempfänger 102_2 bestimmtes Datenpaket in zumindest zwei Sendedatenpakete 106_1-106_n aufzuteilen, wobei jedes der für den zweiten Datenempfänger 102_2 bestimmten Sendedatenpakete 106_1-106_m kürzer ist als das zweite Datenpaket 106; wobei die Einrichtung 114 zum Senden von Datenpaketen ausgebildet ist, um die zumindest zwei für den zweiten Datenempfänger 102_2 bestimmten Sendedatenpakete 106_1-106_m mit einem zeitlichen Abstand über den Kommunikationskanal zu senden; und wobei eins der zumindest zwei für den zweiten Datenempfänger 102_2 bestimmten Sendedatenpakete 106_1-106_m das weitere Sendedatenpaket 124 ist.

Gemäß einem dritten Aspekt unter Bezugnahme auf den zweiten Aspekt ist die Einrichtung 114 zum Senden von Datenpaketen ausgebildet, um die zumindest zwei für den ersten Datenempfänger 100_1 bestimmten Sendedatenpakete 104_1-104_n und die zumindest zwei für den zweiten Datenempfänger 102_2 bestimmten Sendedatenpakete 106_1-106_m abwechselnd in dem zeitlichen Abstand zwischen den für den jeweils anderen Datenempfänger bestimmten Sendedatenpaketen zu senden.

Gemäß einem vierten Aspekt unter Bezugnahme auf zumindest einen des ersten bis dritten Aspekts sind die zumindest zwei Sendedatenpakete 104_1-104_n zumindest drei Sendedatenpakete 104_1-104_n, wobei die Einrichtung 112 zum Erzeugen von Sendedatenpaketen ausgebildet ist, um die zumindest drei Sendedatenpakete 104_1-104_n derart kanalzucodieren, dass nur ein Anteil der Sendedatenpakete 104_1-104_n zum Decodieren des ersten Datenpakets 104 erforderlich ist.

Gemäß einem fünften Aspekt weist ein Datensender 100_1 folgende Merkmale auf: eine Einrichtung 112 zum Erzeugen von Sendedatenpaketen, die ausgebildet ist, um ein erstes Datenpaket 104 in zumindest drei Sendedatenpakete 104_1-104_n aufzuteilen, wobei jedes der zumindest drei Sendedatenpakete 104_1-104_n kürzer ist als das erste Datenpaket 104, wobei die Einrichtung 112 zum Erzeugen von Datenpaketen ausgebildet ist, um die zumindest drei Sendedatenpakete 104_1-104_n derart kanalzucodieren, dass nur ein Anteil der Sendedatenpakete 104_1-104_n zum Decodieren des ersten Datenpakets 104 erforderlich ist; eine Einrichtung 114 zum Senden von Datenpaketen, die ausgebildet ist, um die zumindest drei Sendedatenpakete 104_1-104_n in einem Frequenzkanal über einen Kommunikationskanal mit einem zeitlichen Abstand 116 zu senden; eine Einrichtung 118 zum Überwachen des Frequenzkanals, die ausgebildet ist, um eine Störung 120 oder eine Übertragung 122 eines anderen Datensenders 100_2 in dem Frequenzkanal zu erkennen; wobei die Einrichtung 114 zum Senden von Datenpaketen ausgebildet ist, um ein zum Senden anstehendes Sendedatenpaket der zumindest drei Sendedatenpakte 104_1-104_n nicht, nur teilweise oder später über den Kommunikationskanal zu senden, wenn zu dem Zeitpunkt des Sendens des Sendedatenpakets eine Störung 120 oder eine Übertragung 122 von einem anderen Datensender 100_2 von der Einrichtung 118 zum Überwachen des Frequenzkanals erkannt wird.

Gemäß einem sechsten Aspekt unter Bezugnahme auf den fünften Aspekt ist die Einrichtung 118 zum Überwachen des Frequenzkanals ausgebildet, um eine Leistungsdetektion in dem Frequenzkanal durchzuführen, um die Störung 120 oder die Übertragung 122 des anderen Datensenders 100_2 in dem Frequenzkanal zu erkennen.

Gemäß einem siebten Aspekt unter Bezugnahme auf zumindest einen des fünften bis sechsten Aspekts ist die Einrichtung 118 zum Überwachen des Frequenzkanals ausgebildet, um die Störung 120 oder die Übertragung 122 des anderen Datensenders 100_2 in dem Frequenzkanal basierend auf einer vorherigen Störung oder vorherigen Übertragung eines anderen Datensenders zu prädizieren; oder die Einrichtung 118 zum Überwachen des Frequenzkanals ist ausgebildet, um die Störung 120 oder die Übertragung 122 des anderen Datensenders 100_2 in dem Frequenzkanal basierend auf einer Störung oder Übertragung eines anderen Datensenders in einem zu dem Frequenzkanal benachbarten Frequenzkanal zu prädizieren.

Gemäß einem achten Aspekt unter Bezugnahme auf zumindest einen des fünften bis siebten Aspekts ist die Einrichtung 114 zum Senden von Datenpaketen ausgebildet, um den zeitlichen Abstand 116 zwischen den Sendedatenpaketen 104_1-104_n in Abhängigkeit von der erkannten Störung 120 oder Übertragung 122 des anderen Datensenders 100_2 anzupassen.

Gemäß einem neunten Aspekt unter Bezugnahme auf zumindest einen des fünften bis achten Aspekts ist die Einrichtung 114 zum Senden von Datenpaketen ausgebildet, um ein weiteres Sendedatenpaket 124 zu dem ersten Datenempfänger oder einem zweiten Datenempfänger in dem zeitlichen Abstand 116 zwischen den zumindest zwei für den ersten Datenempfänger 102_1 bestimmten Sendedatenpaketen 104_1-104_n zu senden.

Gemäß einem zehnten Aspekt weist der Datensender 100_1 folgende Merkmale auf: eine Einrichtung 112 zum Erzeugen von Sendedatenpaketen, die ausgebildet ist, um ein erstes Datenpaket 104 in zumindest drei Sendedatenpakete 104_1-104_n aufzuteilen, wobei jedes der zumindest drei Sendedatenpakete 104_1-104_n kürzer ist als das erste Datenpaket 104, wobei die Einrichtung 112 zum Erzeugen von Datenpaketen ausgebildet ist, um die zumindest drei Sendedatenpakete 104_1-104_n derart kanalzucodieren, dass nur ein Anteil der Sendedatenpakete 104_1-104_n zum Decodieren des ersten Datenpakets 104 erforderlich ist; eine Einrichtung 114 zum Senden von Datenpaketen, die ausgebildet ist, um die zumindest drei Sendedatenpakete 104_1-104_n über einen Kommunikationskanal mit einem zeitlichen Abstand 116 zu senden; wobei die Einrichtung 114 zum Senden von Datenpaketen ausgebildet ist, um ein zum Senden anstehendes Sendedatenpaket der zumindest drei Sendedatenpakte 104_1-104_n nicht, nur teilweise oder später zu senden.

Gemäß einem elften Aspekt unter Bezugnahme auf den zehnten Aspekt ist die Einrichtung 114 zum Senden von Datenpaketen ausgebildet, um ein zum Senden anstehendes Sendedatenpaket der zumindest drei Sendedatenpakte 104_1-104_n nicht, nur teilweise oder später zu senden, wenn zu dem Zeitpunkt des Sendes des einen Sendedatenpakets ein weiteres Sendedatenpaket 124 zum Senden ansteht.

Gemäß einem zwölften Aspekt unter Bezugnahme auf den elften Aspekt ist die Einrichtung 114 zum Senden von Datenpaketen ausgebildet, um das weitere Sendedatenpaket 124 über den Kommunikationskanal zu senden.

Gemäß einem dreizehnten Aspekt unter Bezugnahme auf zumindest einen des elften bis zwölften Aspekts sind die zumindest drei Sendedatenpakete 104_1-104_n für einen ersten Datenempfänger 102_1 bestimmt; wobei die Einrichtung 112 zum Erzeugen von Sendedatenpaketen ausgebildet ist, um ein zweites für einen zweiten Datenempfänger 102_2 bestimmtes Datenpaket 106 in zumindest drei Sendedatenpakete 106_1-106_m aufzuteilen, wobei jedes der für den zweiten Datenempfänger 102_2 bestimmten Sendedatenpakete 106_1-106_m kürzer ist als das zweite Datenpaket 106;wobei die Einrichtung 112 zum Erzeugen von Datenpaketen ausgebildet ist, um die zumindest drei für den zweiten Datenempfänger 102_2 bestimmten Sendedatenpakete 106_1-106_m derart kanalzucodieren, dass nur ein Anteil der Sendedatenpakete zum Decodieren des zweiten Datenpakets 106 erforderlich ist; wobei die Einrichtung 114 zum Senden von Datenpaketen ausgebildet ist, um die zumindest drei für den zweiten Datenempfänger 102_2 bestimmten Sendedatenpakete 106_1-106_m mit einem zeitlichen Abstand über den Kommunikationskanal zu senden; und wobei eins der zumindest drei für den zweiten Datenempfänger 102_2 bestimmten Sendedatenpakete 106_1-106_m das weitere Sendedatenpaket ist.

Gemäß einem vierzehnten Aspekt unter Bezugnahme auf den elften Aspekt wird das weitere Sendedatenpaket 124 von einem anderen Datensender 100_2 gesendet.

Gemäß einem fünfzehnten Aspekt unter Bezugnahme auf den vierzehnten Aspekt ist dem Datensender der Zeitpunkt des Sendens des weiteren Sendedatenpakets 124 durch den anderen Datensender 100_2 bekannt.

Gemäß einem sechzehnten Aspekt unter Bezugnahme auf zumindest einen des elften bis fünfzehnten Aspekts ist die Einrichtung 114 zum Senden von Datenpaketen ausgebildet, um ein zum Senden anstehendes Sendedatenpaket der zumindest drei Sendedatenpakte 104_1-104_n nicht, nur teilweise oder später zu senden, wenn zu dem Zeitpunkt des Sendes des einen Sendedatenpakets ein weiteres Sendedatenpaket 124 zum Senden ansteht und das weitere Sendedatenpaket 124 ein Übertragungskriterium erfüllt.

Gemäß einem siebzehnten Aspekt unter Bezugnahme auf den sechzehnten Aspekt gibt das Übertragungskriterium an, dass das weitere Sendedatenpaket eine höhere Sendepriorität aufweist, als das zum Senden anstehende Sendedatenpaket der zumindest drei Sendedatenpakte 104_1-104_n.

Gemäß einem achtzehnten Aspekt unter Bezugnahme auf den sechzehnten Aspekt gibt das Übertragungskriterium an, dass die Übertragung des weiteren Sendedatenpakets 124 eine Decodierung des ersten Datenpakets 104 durch einen Datenempfänger 102_1,102_2 basierend auf den anderen Sendedatenpaketen der zumindest drei Sendedatenpakete 104_1-104_n mit einer Wahrscheinlichkeit von zumindest 90% dennoch möglich ist.

Gemäß einem neunzehnten Aspekt unter Bezugnahme auf den achtzehnten Aspekt wird bei der Ermittlung der Wahrscheinlichkeit eine Kanalqualität berücksichtigt.

Gemäß einem zwanzigsten Aspekt unter Bezugnahme auf zumindest einen des achtzehnten bis neunzehnten Aspekts wird bei der Ermittlung der Wahrscheinlichkeit eine Anzahl zuvor nicht ausgesendeter Sendedatenpakete der zumindest drei Sendedatenpakete 104_1-104_n berücksichtigt.

Gemäß einem einundzwanzigsten Aspekt unter Bezugnahme auf den sechzehnten Aspekt gibt das Übertragungskriterium an, dass das zum Senden anstehende Sendedatenpaket und das weitere Sendedatenpaket 124 in dem gleichen Frequenzkanal gesendet werden.

Gemäß einem zweiundzwanzigsten Aspekt unter Bezugnahme auf den vierzehnten und sechzehnten Aspekt ist der Datensender ein Datensendeempfänger, wobei das Übertragungskriterium angibt, dass ein Empfang des weiteren Sendedatenpakets 124 durch den Datensendeempfänger 100_1 erforderlich ist.

Gemäß einem dreiundzwanzigsten Aspekt unter Bezugnahme auf zumindest einen des zehnten bis zweiundzwanzigsten Aspekts ist die die Einrichtung 114 zum Senden von Datenpaketen ausgebildet, um ein zum Senden anstehendes Sendedatenpaket der zumindest drei Sendedatenpakte 104_1-104_n in Abhängigkeit von äußeren Gegebenheiten nicht, nur teilweise oder später zu senden.

Gemäß einem vierundzwanzigsten Aspekt unter Bezugnahme auf zumindest einen des ersten bis dreiundzwanzigsten Aspekts ist die Einrichtung 114 zum Senden von Datenpaketen ausgebildet, um ein erstes der für den ersten Datenempfänger 102_1 bestimmten Sendedatenpakete in einem ersten Frequenzkanal zu senden, und um ein zweites der für den zweiten Datenempfänger 102_2 bestimmten Sendedatenpakete in einem zweiten Frequenzkanal zu senden.

Gemäß einem fünfundzwanzigsten Aspekt unter Bezugnahme auf zumindest einen des ersten bis vierundzwanzigsten Aspekts ist die Einrichtung 114 zum Senden von Datenpaketen ausgebildet, um die Sendepakete 104_1-104_n über zumindest zwei Frequenzkanäle zu verteilen.

Gemäß einem sechsundzwanzigsten Aspekt unter Bezugnahme auf zumindest einen des ersten bis fünfundzwanzigsten Aspekts ist der Datensender 100_1 ein Datensendeempfänger und weist ferner folgendes Merkmal auf: eine Einrichtung 138 zum Empfangen von Datenpaketen, die ausgebildet ist, um in dem zeitlichen Abstand 116 zwischen den für den ersten Datenempfänger 102_2 bestimmten Sendedatenpaketen ein Sendedatenpaket 140 von einem anderen Datensender 100_2 zu empfangen.

Gemäß einem siebenundzwanzigsten Aspekt unter Bezugnahme auf den sechsundzwanzigsten Aspekt ist die Einrichtung 138 zum Empfangen von Datenpaketen ausgebildet, um in dem zeitlichen Abstand 116 zwischen den für den ersten Datenempfänger 102_1 bestimmten Sendedatenpaketen 104_1-104_n zumindest eins von zumindest zwei Sendedatenpaketen 108_1-108_b, die von dem anderen Datensender 100_2 gesendet werden, zu empfangen, wobei die zumindest zwei Sendedatenpakete 108_1-108_b von dem anderen Datensender 100_2 mit einem zeitlichen Abstand über den Kommunikationskanal gesendet werden und jeweils einen Teil eines anderen Datenpakets 108 enthalten, wobei die Einrichtung 138 zum Empfangen von Datenpaketen ausgebildet ist, um die zumindest zwei Sendedatenpakete 108_1-108_b zu kombinieren, um das andere Datenpaket 108 zu erhalten; wobei eins der zumindest zwei Sendedatenpakete 108_1-108_b von dem anderen Datensender 100_2 das Sendedatenpaket 140 von dem anderen Datensender ist.

Gemäß einem achtundzwanzigsten Aspekt unter Bezugnahme auf zumindest einen des ersten bis siebenundzwanzigsten Aspekts ist der Datensender 100_1 ausgebildet, um unter Verwendung eines weiteren Sendedatenpakets den Sendezeitpunkt zumindest eines der Sendedatenpakete oder zumindest einen zeitlichen Abstand zwischen zwei der Sendedatenpakete auszusenden.

Gemäß einem neunundzwanzigsten Aspekt unter Bezugnahme auf zumindest einen des ersten bis achtundzwanzigsten Aspekts ist der Datensender 100_1 ausgebildet, um unter Verwendung eines weiteren Sendedatenpakets einem anderen Datensender einen Sendezeitpunkt, zu dem der andere Datensender ein Sendedatenpaket aussendet, oder einen zeitlichen Abstand zwischen zwei von dem anderen Datensender ausgesendeten Sendedatenpaketen vorzugeben.

Gemäß einem dreißigsten Aspekt unter Bezugnahme auf zumindest einen des ersten bis neunundzwanzigsten Aspekts ist die Einrichtung 114 zum Senden von Datenpaketen ausgebildet, um den zeitlichen Abstand zwischen den Sendedatenpaketen oder das nicht aussenden eines Sendedatenpakets in Abhängigkeit von einer Qualität oder Belegung des Kommunikationskanals anzupassen.

Gemäß einem einunddreißigsten Aspekt unter Bezugnahme auf zumindest einen des ersten bis dreißigsten Aspekts ist der Datensender ein Datensendeempfänger, der ferner folgendes Merkmal aufweist: eine Einrichtung 138 zum Empfangen von Datenpaketen, die ausgebildet ist, um ein Datenpaket von dem ersten Datenempfänger 102_1 zu empfangen und um eine Empfangsleistung oder ein Empfangsqualität zu ermitteln; wobei der Datensender 100_1 ausgebildet ist, um eine Sendeleistung mit der die Sendedatenpakete 104_1-104_n zu dem ersten Datenempfänger 102_1 gesendet werden in Abhängigkeit von der ermittelten Empfangsleistung oder der Empfangsqualität anzupassen.

Gemäß einem zweiunddreißigsten Aspekt unter Bezugnahme auf zumindest einen des fünften bis einunddreißigsten Aspekts ist die Einrichtung 114 zum Senden von Datenpaketen ausgebildet, um, wenn zu dem Zeitpunkt des Sendes des einen Sendedatenpakets ein weiteres Sendedatenpaket 124 zum Senden ansteht, um das zum Senden anstehende Sendedatenpaket der zumindest drei Sendedatenpakte 104_1-104_n teilweise so zu senden, dass ausgesendete Teile des einen Sendedatenpakets zu einer konstruktiven Überlagerung mit dem weiteren Sendedatenpaket 124 führen.

Gemäß einem dreiunddreißigsten Aspekt weist der Datenempfänger 102_1 folgende Merkmale auf: eine Einrichtung 134 zum Empfangen von Datenpaketen, die ausgebildet ist, um zumindest zwei Sendedatenpakete 104_1-104_n von einem ersten Datensender 100_1 zu empfangen, die mit einem zeitlichen Abstand 116 über einen Kommunikationskanal gesendet werden und jeweils einen Teil eines ersten Datenpakets 104 enthalten, wobei die Einrichtung 134 zum Empfangen von Datenpaketen ausgebildet ist, um die zumindest zwei Sendedatenpakete 104_1-104_n zu kombinieren, um das erste Datenpaket 104 zu erhalten; wobei die Einrichtung 134 zum Empfangen von Datenpaketen ausgebildet ist, um in dem zeitlichen Abstand 116 zwischen den zumindest zwei Sendedatenpaketen 104_1-104_n zumindest ein weiteres Datenpaket 124 von dem ersten Datensender 100_1 oder einem zweiten Datensender 100_2 zu empfangen.

Gemäß einem vierunddreißigsten Aspekt unter Bezugnahme auf den dreiunddreißigsten Aspekt ist die Einrichtung 138 zum Empfangen von Datenpaketen ausgebildet, um zumindest zwei Sendedatenpakete 106_1-106_m von einem zweiten Datensender 100_2 zu empfangen, die mit einem zeitlichen Abstand über einen Kommunikationskanal gesendet werden und jeweils einen Teil eines zweiten Datenpakets 106 enthalten, wobei die Einrichtung 134 zum Empfangen von Datenpaketen ausgebildet ist, um die zumindest zwei Sendedatenpakete 106_1-106_m zu kombinieren, um das zweite Datenpaket 106 zu erhalten; wobei zumindest eins der zumindest zwei Sendedatenpakete 106_1-106_m von dem zweiten Datensender 100_2 das zumindest eine weitere Sendedatenpaket 124 ist.

Gemäß einem fünfunddreißigsten Aspekt unter Bezugnahme auf den vierunddreißigsten Aspekt ist die Einrichtung 134 zum empfangen von Datenpaketen ausgebildet, um die zumindest zwei Sendedatenpakete 104_1-104_n von dem ersten Datensender 100_1 und die zumindest zwei Datenpakete 106_1-106_m von dem zweiten Datensender 100_2 abwechselnd in dem zeitlichen Abstand zwischen den Sendedatenpaketen von dem jeweils anderen Datensender zu empfangen.

Gemäß einem sechsunddreißigsten Aspekt unter Bezugnahme auf zumindest einen des dreiunddreißigsten bis fünfunddreißigsten Aspekts sind die zumindest zwei Sendedatenpakete 104_1-104_n zumindest drei Sendedatenpakete, wobei die zumindest drei Sendedatenpakete 104_1-104_n derart kanalcodiert sind, dass nur ein Anteil der zumindest drei Sendedatenpakete 104_1-104_n zum Decodieren erforderlich ist; wobei die Einrichtung 138 zum Empfangen von Datenpaketen ausgebildet ist, um zumindest zwei der zumindest drei Sendedatenpakete 104_1-104_n zu empfangen, zu kombinieren und zu decodieren, um das erste Datenpaket 104 zu erhalten.

Gemäß einem siebenunddreißigsten Aspekt weist ein System 128 folgende Merkmale auf: zumindest einen Datensender 100_1 nach einem des ersten bis einunddreißigsten Aspekts; und zumindest einen Datenempfänger 102_1 nach einem des zweiunddreißigsten bis fünfunddreißigsten Aspekts.

Gemäß einem achtunddreißigsten Aspekt weist ein Verfahren folgende Schritte auf:
Erzeugen von zumindest zwei Sendedatenpakten durch Aufteilen eines für einen ersten Datenempfänger bestimmten ersten Datenpakets in die zumindest zwei Sendedatenpakete, wobei jedes der für den ersten Datenempfänger bestimmten Sendedatenpakete kürzer ist als das erste Datenpaket; Senden der zumindest zwei für den ersten Datenempfänger bestimmten Sendedatenpakete mit einem zeitlichen Abstand über einen Kommunikationskanal; Senden eines weiteren Sendedatenpakets zu dem ersten Datenempfänger oder einem zweiten Datenempfänger in dem zeitlichen Abstand zwischen den zumindest zwei für den ersten Datenempfänger bestimmten Sendedatenpaketen.

Gemäß einem neununddreißigsten Aspekt weist ein Verfahren folgende Schritte auf: Erzeugen von zumindest drei Sendedatenpaketen durch Aufteilen eines für einen ersten Datenempfänger bestimmten ersten Datenpakets in die zumindest drei Sendedatenpakete, wobei jedes der zumindest drei Sendedatenpakete kürzer ist als das erste Datenpaket, wobei bei dem Erzeugen der zumindest drei Sendedatenpakete die zumindest drei Sendedatenpakete derart kanalcodiert werden, dass nur ein Anteil der Sendedatenpakete zum Decodieren des ersten Datenpakets erforderlich ist; Senden der zumindest drei Sendedatenpakete in einem Frequenzkanal über einen Kommunikationskanal mit einem zeitlichen Abstand; Überwachen des Frequenzkanals, um eine Störung oder eine Übertragung eines anderen Datensenders in dem Frequenzkanal zu erkennen; wobei bei dem Senden der zumindest drei Sendedatenpakete ein zum Senden anstehendes Sendedatenpaket der zumindest drei Sendedatenpakte nicht, nur teilweise oder später über den Kommunikationskanal gesendet wird, wenn zu dem Zeitpunkt des Sendens des Datenpakets eine Störung oder eine Übertragung von einem anderen Datensender von der Einrichtung zum Überwachen des Frequenzkanals erkannt wird.

Gemäß einem vierzigsten Aspekt weist ein Verfahren folgende Schritte auf: Erzeugen von zumindest drei Sendedatenpaketen durch Aufteilen eines für einen ersten Datenempfänger bestimmten ersten Datenpakets in die zumindest drei Sendedatenpakete, wobei jedes der zumindest drei Sendedatenpakete kürzer ist als das erste Datenpaket, wobei bei dem Erzeugen der zumindest drei Sendedatenpakete die zumindest drei Sendedatenpakete derart kanalcodiert werden, dass nur ein Anteil der Sendedatenpakete zum Decodieren des ersten Datenpakets erforderlich ist; Senden der zumindest drei Sendedatenpakete in einem Frequenzkanal über einen Kommunikationskanal mit einem zeitlichen Abstand; wobei bei dem Senden der zumindest drei Sendedatenpakete ein zum Senden anstehendes Sendedatenpaket der zumindest drei Sendedatenpakte nicht, nur teilweise oder später gesendet wird, wenn zu dem Zeitpunkt des Sendes des einen Sendedatenpakets ein weiteres Sendedatenpaket zum Senden ansteht.

Gemäß einem einundvierzigsten Aspekt weist ein Verfahren folgende Schritte auf: Empfangen von zumindest zwei Sendedatenpaketen von einem ersten Datensender, wobei die zumindest zwei Sendedatenpakete mit einem zeitlichen Abstand über einen Kommunikationskanal gesendet werden und jeweils einen Teil eines ersten Datenpakets enthalten; Kombinieren der zumindest zwei Sendedatenpakete, um das erste Datenpaket zu erhalten; und Empfangen zumindest eines weiteren Datenpakets in dem zeitlichen Abstand zwischen den zumindest zwei Sendedatenpaketen von dem ersten Datensender oder einem zweiten Datensender.

Ein zweiundvierzigster Aspekt weist ein Computerprogramm zur Durchführung eines Verfahrens gemäß einem des achtunddreißigsten bis einundvierzigsten Aspekts auf.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfah-rensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispie-Ien können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Des-halb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren auf-gezeichnet ist. Der Datenträger, das digitale Speichermedium oder das computerlesbare Medium sind typischerweise gegenständlich und/oder nicht-vergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten ein-leuchten werden. Deshalb ist beabsichtigt, dass die Erfindung lediglich durch den Schutz-umfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Datensender (100_1) eines Kommunikationssystems,
wobei der Datensender (100_1) ein Knoten oder eine Basisstation des Kommunikationssystems ist, wobei der Knoten ein Sensorknoten oder ein Aktorknoten ist,
wobei ein von dem Kommunikationssystem genutztes Funkübertragungsband mit vielen weiteren Kommunikationssystemen geteilt wird
wobei der Datensender (100_1) eine Einrichtung (112) zum Erzeugen von Sendedatenpaketen aufweist, die ausgebildet ist, um ein erstes für einen ersten Datenempfänger (102_1) bestimmtes Datenpaket (104) in zumindest zwei Sendedatenpakete (104_1-104_n) aufzuteilen, wobei jedes der für den ersten Datenempfänger (102_1) bestimmten Sendedatenpakete (104_1-104_n) kürzer ist als das erste Datenpaket (104);
wobei der Datensender (100_1) eine Einrichtung (114) zum Senden von Datenpaketen aufweist, die ausgebildet ist, um die zumindest zwei für den ersten Datenempfänger (102_1) bestimmten Sendedatenpakete (104_1-104_n) unter Verwendung eines Zeitsprungmusters mit einem zeitlichen Abstand (116) über einen Kommunikationskanal zu senden;
wobei die Einrichtung (114) zum Senden von Datenpaketen ausgebildet ist, um zumindest ein weiteres Sendedatenpaket (124) zu dem ersten Datenempfänger (102_1) oder einem zweiten Datenempfänger (102_2) in dem zeitlichen Abstand (116) zwischen den zumindest zwei für den ersten Datenempfänger (102_1) bestimmten Sendedatenpaketen (104_1-104_n) zu senden.

2. Datensender (100_1) nach Anspruch 1, wobei die Einrichtung (112) zum Erzeugen von Sendedatenpaketen ausgebildet ist, um ein zweites (106) für den zweiten Datenempfänger (102_2) bestimmtes Datenpaket in zumindest zwei Sendedatenpakete (106_1-106_n) aufzuteilen, wobei jedes der für den zweiten Datenempfänger (102_2) bestimmten Sendedatenpakete (106_1-106_m) kürzer ist als das zweite Datenpaket (106);
wobei die Einrichtung (114) zum Senden von Datenpaketen ausgebildet ist, um die zumindest zwei für den zweiten Datenempfänger (102_2) bestimmten Sendedatenpakete (106_1-106_m) mit einem zeitlichen Abstand über den Kommunikationskanal zu senden; und
wobei eins der zumindest zwei für den zweiten Datenempfänger (102_2) bestimmten Sendedatenpakete (106_1-106_m) das weitere Sendedatenpaket (124) ist.

3. Datensender (100_1) nach Anspruch 2, wobei die Einrichtung (114) zum Senden von Datenpaketen ausgebildet ist, um die zumindest zwei für den ersten Datenempfänger (100_1) bestimmten Sendedatenpakete (104_1-104_n) und die zumindest zwei für den zweiten Datenempfänger (102_2) bestimmten Sendedatenpakete (106_1-106_m) abwechselnd in dem zeitlichen Abstand zwischen den für den jeweils anderen Datenempfänger bestimmten Sendedatenpaketen zu senden.

4. Datensender (100_1) nach einem der Ansprüche 1 bis 3, wobei die zumindest zwei Sendedatenpakete (104_1-104_n) zumindest drei Sendedatenpakete (104_1-104_n) sind, wobei die Einrichtung (112) zum Erzeugen von Sendedatenpaketen ausgebildet ist, um die zumindest drei Sendedatenpakete (104_1-104_n) derart kanalzucodieren, dass nur ein Anteil der Sendedatenpakete (104_1-104_n) zum Decodieren des ersten Datenpakets (104) erforderlich ist.

5. Datensender (100_1) nach einem der Ansprüche 1 bis 4, wobei der Datensender (100_1) ausgebildet ist, um unter Verwendung eines weiteren Sendedatenpakets den Sendezeitpunkt zumindest eines der Sendedatenpakete oder zumindest einen zeitlichen Abstand zwischen zwei der Sendedatenpakete auszusenden.

6. Datensender (100_1) nach einem der Ansprüche 1 bis 5, wobei der Datensender (100_1) ausgebildet ist, um unter Verwendung eines weiteren Sendedatenpakets einem anderen Datensender einen Sendezeitpunkt, zu dem der andere Datensender ein Sendedatenpaket aussendet, oder einen zeitlichen Abstand zwischen zwei von dem anderen Datensender ausgesendeten Sendedatenpaketen vorzugeben.

7. Datensender (100_1) nach einem der Ansprüche 1 bis 6, wobei der Datensender ein Datensendeempfänger ist, der ferner aufweist:
eine Einrichtung (138) zum Empfangen von Datenpaketen, die ausgebildet ist, um ein Datenpaket von dem ersten Datenempfänger (102_1) zu empfangen und um eine Empfangsleistung oder eine Empfangsqualität zu ermitteln;
wobei der Datensender (100_1) ausgebildet ist, um eine Sendeleistung mit der die Sendedatenpakete (104_1-104_n) zu dem ersten Datenempfänger (102_1) gesendet werden in Abhängigkeit von der ermittelten Empfangsleistung oder der Empfangsqualität anzupassen.

8. Datenempfänger (102_1) eines Kommunikationssystems,
wobei der Datenempfänger (102_1) ein Knoten oder eine Basisstation des Kommunikationssystems ist, wobei der Knoten ein Sensorknoten oder ein Aktorknoten ist,
wobei ein von dem Kommunikationssystem genutztes Funkübertragungsband mit vielen weiteren Kommunikationssystemen geteilt wird,
wobei der Datenempfänger (102_1) eine Einrichtung (134) zum Empfangen von Datenpaketen aufweist, die ausgebildet ist, um zumindest zwei Sendedatenpakete (104_1-104_n) von einem ersten Datensender (100_1) zu empfangen, die unter Verwendung eines Zeitsprungmusters mit einem zeitlichen Abstand (116) über einen Kommunikationskanal gesendet werden und jeweils einen Teil eines ersten Datenpakets (104) enthalten, wobei die Einrichtung (134) zum Empfangen von Datenpaketen ausgebildet ist, um die zumindest zwei Sendedatenpakete (104_1-104_n) zu kombinieren, um das erste Datenpaket (104) zu erhalten;
wobei die Einrichtung (134) zum Empfangen von Datenpaketen ausgebildet ist, um in dem zeitlichen Abstand (116) zwischen den zumindest zwei Sendedatenpaketen (104_1-104_n) zumindest ein weiteres Datenpaket (124) von dem ersten Datensender (100_1) oder einem zweiten Datensender (100_2) zu empfangen.

9. Datenempfänger (102_1) nach Anspruch 8, wobei die Einrichtung (138) zum Empfangen von Datenpaketen ausgebildet ist, um zumindest zwei Sendedatenpakete (106_1-106_m) von einem zweiten Datensender (100_2) zu empfangen, die mit einem zeitlichen Abstand über einen Kommunikationskanal gesendet werden und jeweils einen Teil eines zweiten Datenpakets (106) enthalten, wobei die Einrichtung (134) zum Empfangen von Datenpaketen ausgebildet ist, um die zumindest zwei Sendedatenpakete (106_1-106_m) zu kombinieren, um das zweite Datenpaket (106) zu erhalten;
wobei zumindest eins der zumindest zwei Sendedatenpakete (106_1-106_m) von dem zweiten Datensender (100_2) das zumindest eine weitere Sendedatenpaket (124) ist.

10. Datenempfänger (102_1) nach Anspruch 9, wobei die Einrichtung (134) zum empfangen von Datenpaketen ausgebildet ist, um die zumindest zwei Sendedatenpakete (104_1-104_n) von dem ersten Datensender (100_1) und die zumindest zwei Datenpakete (106_1-106_m) von dem zweiten Datensender (100_2) abwechselnd in dem zeitlichen Abstand zwischen den Sendedatenpaketen von dem jeweils anderen Datensender zu empfangen.

11. Datenempfänger (102_1) nach einem der Ansprüche 8 bis 10, wobei die zumindest zwei Sendedatenpakete (104_1-104_n) zumindest drei Sendedatenpakete sind, wobei die zumindest drei Sendedatenpakete (104_1-104_n) derart kanalcodiert sind, dass nur ein Anteil der zumindest drei Sendedatenpakete (104_1-104_n) zum Decodieren erforderlich ist;
wobei die Einrichtung (138) zum Empfangen von Datenpaketen ausgebildet ist, um zumindest zwei der zumindest drei Sendedatenpakete (104_1-104_n) zu empfangen, zu kombinieren und zu decodieren, um das erste Datenpaket (104) zu erhalten.

12. System (128) mit folgenden Merkmalen:
zumindest einem Datensender (100_1) nach einem der Ansprüche 1 bis 7; und
zumindest einem Datenempfänger (102_1) nach einem der Ansprüche 8 bis 11.

13. Verfahren zum Senden von Daten mit einem Datensender eines Kommunikationssystems, wobei der Datensender ein Knoten oder eine Basisstation des Kommunikationssystems ist, wobei der Knoten ein Sensorknoten oder ein Aktorknoten ist, wobei ein von dem Kommunikationssystem genutztes Funkübertragungsband mit vielen weiteren Kommunikationssystemen geteilt wird, aufweisend:
Erzeugen von zumindest zwei Sendedatenpakten durch Aufteilen eines für einen ersten Datenempfänger bestimmten ersten Datenpakets in die zumindest zwei Sendedatenpakete, wobei jedes der für den ersten Datenempfänger bestimmten Sendedatenpakete kürzer ist als das erste Datenpaket;
Senden der zumindest zwei für den ersten Datenempfänger bestimmten Sendedatenpakete unter Verwendung eines Zeitsprungmusters mit einem zeitlichen Abstand über einen Kommunikationskanal;
Senden eines weiteren Sendedatenpakets zu dem ersten Datenempfänger oder einem zweiten Datenempfänger in dem zeitlichen Abstand zwischen den zumindest zwei für den ersten Datenempfänger bestimmten Sendedatenpaketen.

14. Verfahren zum Empfangen von Daten mit einem Datenempfänger eines Kommunikationssystems, wobei der Datenempfänger ein Knoten oder eine Basisstation des Kommunikationssystems ist, wobei der Knoten ein Sensorknoten oder ein Aktorknoten ist, wobei ein von dem Kommunikationssystem genutztes Funkübertragungsband mit vielen weiteren Kommunikationssystemen geteilt wird, aufweisend:
Empfangen von zumindest zwei Sendedatenpaketen von einem ersten Datensender, wobei die zumindest zwei Sendedatenpakete unter Verwendung eines Zeitsprungmusters mit einem zeitlichen Abstand über einen Kommunikationskanal gesendet werden und jeweils einen Teil eines ersten Datenpakets enthalten;
Kombinieren der zumindest zwei Sendedatenpakete, um das erste Datenpaket zu erhalten; und
Empfangen zumindest eines weiteren Datenpakets in dem zeitlichen Abstand zwischen den zumindest zwei Sendedatenpaketen von dem ersten Datensender oder einem zweiten Datensender.

15. Computerprogramm umfassend Befehle, die bei der Ausführung des Programms durch einen Computer diesen veranlassen, das Verfahren nach einem der Ansprüche 13 bis 14 auszuführen.

## Claims

1. A data transmitter (100_1) of a communication system,
wherein the data transmitter (100_1) is a node or a base station of the communication system, the node being a sensor node or an actuator node,
wherein a radio transmission band used by the communication system is shared with many further communication systems,
wherein the data transmitter (100_1) comprises means (112) for generating transmission data packets, configured to split a first data packet (104) destined for a first data receiver (102_1) into at least two transmission data packets (104_1-104_n), wherein each of the transmission data packets (104_1-104_n) destined for the first data receiver (102_1) is shorter than the first data packet (104);
wherein the data transmitter (100_1) comprises means (114) for transmitting data packets, configured to transmit the at least two transmission data packets (104_1-104_n) destined for the first data receiver (102_1) via a communications channel using a time hopping pattern with a time gap (116);
wherein the means (114) for transmitting data packets is configured to transmit at least one further transmission data packet (124) to the first data receiver (102_1) or a second data receiver (102_2) in the time gap (116) between the at least two transmission data packets (104_1-104_n) destined for the first data receiver (102_1).

2. The data transmitter (100_1) in accordance with claim 1, wherein the means (112) for generating transmission data packets is configured to split a second data packet (106) destined for the second data receiver (102_2) into at least two transmission data packets (106_1-106_n), wherein each of the transmission data packets (106_1-106_m) destined for the second data receiver (102_2) is shorter than the second data packet (106);
wherein the means (114) for transmitting data packets is configured to transmit the at least two transmission data packets (106_1-106_m) destined for the second data receiver (102_2) via the communications channel with a time gap; and
wherein one of the at least two transmission data packets (106_1-106_m) destined for the second data receiver (102_2) is the further transmission data packet (124).

3. The data transmitter (100_1) in accordance with claim 2, wherein the means (114) for transmitting data packets is configured to transmit the at least two transmission data packets (104_1-104_n) destined for the first data receiver (100_1) and the at least two transmission data packets (106_1-106_m) destined for the second data receiver (102_2) alternatingly in the time gap between the transmission data packets destined for the respective other data receiver.

4. The data transmitter (100_1) in accordance with any of claims 1 to 3, wherein the at least two transmission data packets (104_1-104_n) are at least three transmission data packets (104_1-104_n), wherein the means (112) for generating transmission data packets is configured to channel-encode the at least three transmission data packets (104_1-104_n) such that only a portion of the transmission data packets (104_1-104_n) is required for decoding the first data packet (104).

5. The data transmitter (100_1) in accordance with any of claims 1 to 4, wherein the dater transmitter (100_1) is configured to emit, using a further transmission data packet, the transmission time of at least one of the transmission data packets or at least a time gap between two of the transmission data packets.

6. The data transmitter (100_1) in accordance with any of claims 1 to 5, wherein the data transmitter (100_1) is configured to predetermine, using a further transmission data packet, to another data transmitter a transmission time when the further data transmitter emits a transmission data packet, or a time gap between two transmission data packets emitted by the other data transmitter.

7. The data transmitter (100_1) in accordance with any of claims 1 to 6, wherein the data transmitter is a data transceiver further comprising:
means (138) for receiving data packets, configured to receive a data packet by the first data receiver (102_1) and to determine a receive power or receive quality;
wherein the data transmitter (100_1) is configured to adjust a transmit power at which the transmission data packets (104_1-104_n) are transmitted to the first data receiver (102_1), in dependence on the determined receive power or receive quality.

8. A data receiver (102_1) of a communication system,
wherein the data receiver (102_1) is a node or a base station of the communication system, the node being a sensor node or an actuator node,
wherein a radio transmission band used by the communication system is shared with many further communication systems,
wherein the data receiver (102_1) comprises means (134) for receiving data packets, configured to receive at least two transmission data packets (104_1-104_n) from a first data transmitter (100_1), which are transmitted via a communications channel using a time hopping pattern with a time gap (116) and each contain part of a first data packet (104), wherein the means (134) for receiving data packets is configured to combine the at least two transmission data packets (104_1-104_n) in order to obtain the first data packet (104);
wherein the means (134) for receiving data packets is configured to receive at least one further data packet (124) from the first data transmitter (100_1) or a second data transmitter (100_2) in the time gap (116) between the at least two transmission data packets (104_1-104_n).

9. The data receiver (102_1) in accordance with claim 8, wherein the means (138) for receiving data packets is configured to receive at least two transmission data packets (106_1-106_m) from a second data transmitter (100_2), which are transmitted via a communications channel with a time gap and each contain part of a second data packet (106), wherein the means (134) for receiving data packets is configured to combine the at least two transmission data packets (106_1-106_m) in order to obtain the second data packet (106);
wherein at least one of the at least two transmission data packets (106_1-106_m) from the second data transmitter (100_2) is the at least one further transmission data packet (124).

10. The data receiver (102_1) in accordance with claim 9, wherein the means (134) for receiving data packets is configured to receive the at least two transmission data packets (104_1-104_n) from the first data transmitter (100_1) and the at least two data packets (106_1-106_m) from the second data transmitter (100_2) alternatingly in the time gap between the transmission data packets from the respective other data transmitter.

11. The data receiver (102_1) in accordance with any of claims 8 to 10, wherein the at least two transmission data packets (104_1-104_n) are at least three transmission data packets, wherein the at least three transmission data packets (104_1-104_n) are channel-encoded such that only a portion of the at least three transmission data packets (104_1-104_n) is required for decoding;
wherein the means (138) for receiving data packets is configured to receive, combine and decode at least two of the at least three transmission data packets (104_1-104_n) in order to obtain the first data packet (104).

12. A system (128) comprising:
at least one data transmitter (100_1) in accordance with any of claims 1 to 7; and
at least one data receiver (102_1) in accordance with any of claims 8 to 11.

13. A method for transmitting data by a data transmitter of a communication system, the data transmitter being a node or a base station of the communication system, the node being a sensor node or an actuator node, wherein a radio transmission band used by the communication system is shared with many further communication systems, comprising:
generating at least two transmission data packets by splitting a first data packet destined for a first data receiver into the at least two transmission data packets, wherein each of the transmission data packets destined for the first data receiver is shorter than the first data packet;
transmitting the at least two transmission data packets destined for the first data receiver via a communications channel using a time hopping pattern with a time gap;
transmitting a further transmission data packet to the first data receiver or a second data receiver in the time gap between the at least two transmission data packets destined for the first data receiver.

14. A method for receiving data by a data receiver of a communication system, the data receiver being a node or a base station of the communication system, the node being a sensor node or an actuator node, wherein a radio transmission band used by the communication system is shared with many further communication systems, comprising:
receiving at least two transmission data packets from a first data transmitter, wherein the at least two transmission data packets are transmitted via a communications channel using a time hopping pattern with a time gap and each contain part of a first data packet;
combining the at least two transmission data packets in order to obtain the first data packet; and
receiving at least one further data packet in the time gap between the at least two transmission data packets from the first data transmitter or a second data transmitter.

15. A computer program comprising instructions which, when the program is executed by a computer, cause the computer to perform the method in accordance with any of claims 13 to 14.

## Revendications

1. Emetteur de données (100_1) d'un système de communications,
dans lequel l'émetteur de données (100_1) est un noeud ou une station de base du système de communications, dans lequel le noeud est un noeud de capteur ou un noeud d'actionneur,
dans lequel une bande de transmission radio utilisée par le système de communications est partagée avec beaucoup d'autres systèmes de communications,
dans lequel l'émetteur de données (100_1) présente un dispositif (112) destiné à générer des paquets de données de transmission qui est conçu pour diviser un premier paquet de données (104) destiné à un premier récepteur de données (102_1) en au moins deux paquets de données de transmission (104_1 à 104-n), dans lequel chacun des paquets de données (104_1 à 104_n) destinés au premier récepteur de données (102_1) est plus court que le premier paquet de données (104);
dans lequel l'émetteur de données (100_1) présente un dispositif (114) destiné à transmettre des paquets de données qui est conçu pour transmettre les au moins deux paquets de données de transmission (104_1 à 104_n) destinés au premier récepteur de données (102_1) à l'aide d'un modèle de saut dans le temps à un intervalle de temps (116) à travers un canal de communication;
dans lequel le dispositif (114) destiné à transmettre des paquets de données est conçu pour transmettre au moins un autre paquet de données de transmission (124) au premier récepteur de données (102_1) ou à un deuxième récepteur de données (102_2) dans l'intervalle de temps (116) entre les au moins deux paquets de données de transmission (104_1 à 104_n) destinés au premier récepteur de données (102_1).

2. Emetteur de données (100_1) selon la revendication 1, dans lequel le dispositif (112) destiné à générer des paquets de données de transmission est conçu pour diviser un deuxième (106) paquet de données destiné au deuxième récepteur de données (102_2) en au moins deux paquets de données de transmission (106_1 à 106_n), dans lequel chacun des paquets de données de transmission (106_1 à 106_m) destinés au deuxième récepteur de données (102_2) est plus court que le deuxième paquet de données (106);
dans lequel le dispositif (114) destiné à transmettre des paquets de données est conçu pour transmettre les au moins deux paquets de données de transmission (106_1 à 106_m) destinés au deuxième récepteur de données (102_2) à un intervalle de temps à travers le canal de communication; et
dans lequel l'un des au moins deux paquets de données de transmission (106_1 à 106_m) destinés au deuxième récepteur de données (102_2) est l'autre paquet de données de transmission (124).

3. Emetteur de données (100_1) selon la revendication 2, dans lequel le dispositif (114) destiné à transmettre des paquets de données est conçu pour transmettre alternativement les au moins deux paquets de données de transmission (104_1 à 104_n) destinés au premier récepteur de données (100_1) et les au moins deux paquets de données de transmission (106_1 à 106_m) destinés au deuxième récepteur de données (102_2) dans l'intervalle de temps entre les paquets de données de transmission destinés à l'autre récepteur de données respectif.

4. Emetteur de données (100_1) selon l'une des revendications 1 à 3, dans lequel les au moins deux paquets de données de transmission (104_1 à 104_n) sont au moins trois paquets de données de transmission (104_1 à 104-n), dans lequel le dispositif (112) destiné à générer des paquets de données de transmission sont conçus pour coder par canal les au moins trois paquets de données de transmission (104_1 à 104_n) de sorte que seule une part des paquets de données de transmission (104_1 à 104_n) soit requise pour décoder le premier paquet de données (104).

5. Emetteur de données (100_1) selon l'une des revendications 1 à 4, dans lequel l'émetteur de données (100_1) est conçu pour transmettre, à l'aide d'un autre paquet de données de transmission, le moment de transmission d'au moins l'un des paquets de données de transmission ou au moins un intervalle de temps entre deux des paquets de données de transmission.

6. Emetteur de données (100_1) selon l'une des revendications 1 à 5, dans lequel l'émetteur de données (100_1) est conçu pour définir, à l'aide d'un autre paquet de données de transmission, pour un autre émetteur de données un moment de transmission auquel l'autre émetteur de données transmet un paquet de données de transmission, ou un intervalle de temps entre deux paquets de données de transmission transmis par l'autre émetteur de données.

7. Emetteur de données (100_1) selon l'une des revendications 1 à 6, dans lequel l'émetteur de données est un récepteur de transmission de données, qui présente par ailleurs:
un dispositif (138) destiné à recevoir des paquets de données, qui est conçu pour recevoir un paquet de données du premier récepteur de données (102_1) et pour déterminer une puissance de réception ou une qualité de réception;
dans lequel l'émetteur de données (100_1) est conçu pour adapter une puissance de transmission avec laquelle les paquets de données de transmission (104_1 à 104_n) sont transmis au premier récepteur de données (102_1) en fonction de la puissance de réception ou de la qualité de réception déterminée.

8. Récepteur de données (102_1) d'un système de communication,
dans lequel le récepteur de données (102_1) est un noeud ou une station de base du système de communication, dans lequel le noeud est un noeud de capteur ou un noeud d'actionneur,
dans lequel une bande de transmission radio utilisée par le système de communications est partagée avec beaucoup d'autres systèmes de communications,
dans lequel le récepteur de données (102_1) présente un dispositif (134) destiné à recevoir des paquets de données, qui est conçu pour recevoir d'un premier émetteur de données (100_1) au moins deux paquets de données de transmission (104_1 à 104_n) qui sont transmis à l'aide d'un modèle de saut dans le temps à un intervalle de temps (116) à travers un canal de communication et qui contiennent, chacun, une partie d'un premier paquet de données (104), dans lequel le dispositif (134) destiné à recevoir des paquets de données est conçu pour combiner les au moins deux paquets de données de transmission (104_1 à 104_n) pour obtenir le premier paquet de données (104);
dans lequel le dispositif (134) destiné à recevoir des paquets de données est conçu pour recevoir, dans l'intervalle de temps (116) entre les au moins deux paquets de données de transmission (104_1 à 104_n), au moins un autre paquet de données (124) du premier émetteur de données (100_1) ou d'un deuxième émetteur de données (100_2).

9. Récepteur de données (102_1) selon la revendication 8, dans lequel le dispositif (138) destiné à recevoir des paquets de données est conçu pour recevoir d'un deuxième émetteur de données (100_2) au moins deux paquets de données (106_1 à 106_m) qui sont transmis à un intervalle de temps à travers un canal de communication et qui contiennent, chacun, une partie d'un deuxième paquet de données (106), dans lequel le dispositif (134) destiné à recevoir des paquets de données est conçu pour combiner les au moins deux paquets de données de transmission (106_1 à 106_m) pour obtenir le deuxième paquet de données (106);
dans lequel au moins l'un des au moins deux paquets de données de transmission (106_1 à 106_m) provenant du deuxième émetteur de données (100_2) est l'au moins un autre paquet de données de transmission (124).

10. Récepteur de données (102_1) selon la revendication 9, dans lequel le dispositif (134) destiné à recevoir des paquets de données est conçu pour recevoir alternativement les au moins deux paquets de données de transmission (104_1 à 104_n) du premier émetteur de données (100_1) et les au moins deux paquets de données (106_1 à 106_m) du deuxième émetteur de données (100_2) dans l'intervalle de temps entre les paquets de données de transmission provenant de l'autre émetteur de données respectif.

11. Récepteur de données (102_1) selon l'une des revendications 8 à 10, dans lequel les au moins deux paquets de données de transmission (104_1 à 104_n) sont au moins trois paquets de données de transmission, dans lequel les au moins trois paquets de données de transmission (104_1 à 104_n) sont codés par canal de sorte que seule une part des au moins trois paquets de données de transmission (104_1 à 104_n) soit requise pour le décodage;
dans lequel le dispositif (138) destiné à recevoir des paquets de données est conçu pour recevoir, pour combiner et pour décoder au moins deux des au moins trois paquets de données de transmission (104_1 à 104_n) pour obtenir le premier paquet de données (104).

12. Système (128), aux caractéristiques suivantes:
au moins un émetteur de données (100_1) selon l'une des revendications 1 à 7; et
au moins un récepteur de données (102_1) selon l'une des revendications 8 à 11.

13. Procédé de transmission de données par un émetteur de données d'un système de communications, dans lequel l'émetteur de données est un noeud ou une station de base du système de communications, dans lequel le noeud est un noeud de capteur ou un noeud d'actionneur, dans lequel une bande de transmission radio utilisée par le système de communications est partagée avec beaucoup d'autres systèmes de communications, présentant le fait de:
générer au moins deux paquets de données de transmission en divisant un premier paquet de données destiné à un premier récepteur de données en les au moins deux paquets de données de transmission, où chacun des paquets de données de transmission destinés au premier récepteur de données est plus court que le premier paquet de données;
transmettre les au moins deux paquets de données de transmission destinés au premier récepteur de données à l'aide d'un modèle de saut dans le temps à travers un canal de communication;
transmettre un autre paquet de données de transmission au premier récepteur de données ou à un deuxième récepteur de données dans l'intervalle de temps entre les au moins deux paquets de données de transmission destinés au premier récepteur de données.

14. Procédé de réception de données par un récepteur de données d'un système de communications, dans lequel le récepteur de données est un noeud ou une station de base du système de communications, dans lequel le noeud est un noeud de capteur ou un noeud d'actionneur, dans lequel une bande de transmission radio utilisée par le système de communications est partagée avec beaucoup d'autres systèmes de communications, présentant le fait de:
recevoir au moins deux paquets de données de transmission d'un premier émetteur de données, où les au moins deux paquets de données de transmission sont transmis à travers un canal de communication à l'aide d'un modèle de saut dans le temps à un intervalle de temps et contiennent, chacun, une partie d'un premier paquet de données;
combiner les au moins deux paquets de données de transmission pour obtenir le premier paquet de données; et
recevoir au moins un autre paquet de données dans l'intervalle de temps entre les au moins deux paquets de données de transmission du premier émetteur de données ou d'un deuxième émetteur de données.

15. Programme d'ordinateur comportant des instructions qui, lorsque le programme est exécuté par un ordinateur, amènent ce dernier à réaliser le procédé selon l'une des revendications 13 à 14.
